(19) Europäisches Patentamt
European Patent Office
Office européen des brevets

(11) **EP 2 241 462 A1**

(12) **EUROPEAN PATENT APPLICATION**
published in accordance with Art. 153(4) EPC

(43) Date of publication:
**20.10.2010 Bulletin 2010/42**

(51) Int Cl.:
*B60G 17/015* (2006.01)     *B60G 17/016* (2006.01)

(21) Application number: **09709036.9**

(22) Date of filing: **06.02.2009**

(86) International application number:
**PCT/JP2009/052042**

(87) International publication number:
**WO 2009/099178 (13.08.2009 Gazette 2009/33)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **07.02.2008 JP 2008027204**
**25.03.2008 JP 2008077677**
**30.05.2008 JP 2008143193**

(71) Applicant: **Equos Research Co., Ltd.**
**Tokyo 101-0021 (JP)**

(72) Inventors:
• **HORIGUCHI, Munehisa**
**Tokyo 101-0021 (JP)**
• **MIZUNO, Akira**
**Tokyo 101-0021 (JP)**
• **KAMIYA, Hitoshi**
**Tokyo 101-0021 (JP)**

(74) Representative: **TBK-Patent**
**Bavariaring 4-6**
**80336 München (DE)**

(54) **CONTROLLER AND VEHICLE**

(57)     A vehicle capable of stably turning by improving turning performance and that is able to ensure comfort by reducing a burden on a driver is provided.

A link mechanism (30) is bent and stretched to incline both left and right wheels (12L, 12R) to the inside during a turn to generate camber thrust by side force and, as a result, turning force is increased. Further, when the link mechanism is bent and stretched, a coupling link (40) is inclined and a passenger section is inclined, thus making it possible to move the center of gravity of the vehicle toward an inner wheel during a turn. By so doing, lift of the inner wheel during a turn is prevented to make it possible to improve turning performance. In addition, since the passenger section is inclined to the inner wheel side during a turn, it is possible to make a passenger experience less centrifugal force.

FIG. 1

**Description**

Technical Field

The invention relates to a vehicle that is able to change the camber angle of a wheel and a control device used for the vehicle and, more particularly, to a control device that is able to prevent a wheel from slipping during travelling and a vehicle equipped with the control device.

Background Art

Conventionally, Japanese Patent Application Publication No. 10-297239 (Patent Literature 1) describes a ground contact force control device that generates a vertical inertial force in a vehicle body with an extension acceleration of an actuator provided between the vehicle body and an axle to temporarily increase the ground contact force on a tire by the reaction force to thereby temporarily exert a weight exceeding a vehicle weight on the ground contact surface of the tire to prevent a slip (slipping), thus making it possible to improve temporary acceleration performance at the time of a quick start, a quick acceleration, or the like.
Patent Literature 1: Japanese Patent Application Publication No. 10-297239

Disclosure of the Invention

Problems to be Solved by the Invention

However, the ground contact force control device described in Patent Literature 1 is a technique for preventing a slip of a tire at the time of a quick start, a quick acceleration, or the like, and does not assume a slip of a wheel that temporarily occurs because of a road surface condition, or the like, during travelling.
In addition, in the ground contact force device described in Patent Literature 1, a slip of a drive wheel is predicted from a throttle opening degree and a vehicle speed at the time of a quick acceleration, so that it is not sufficient as a wheel slip prediction during travelling. Furthermore, in the ground contact force device described in Patent Literature 1, as a slip of a drive wheel is predicted, an additional ground contact force for increasing a vertical load on a drive wheel is calculated; however, a road surface condition set value, which is one of parameters necessary for calculating the additional ground contact force, is a value manually set by a user, so that it is not sufficient in terms of accuracy as well.
The invention is made in consideration of the above described situation, and it is an object to provide a control device and vehicle that are able to effectively prevent a temporary slip of a wheel during travelling.

Means for Solving the Problem

In order to solve the above object, a control device recited in claim 1 is used for a vehicle that includes a plurality of wheels and a camber angle adjusting device that adjusts camber angles of the wheels, wherein the vehicle includes wheel state detecting means that detects a state of each of the wheels during travelling, and the control device includes: determining means that determines whether there is a wheel that is likely to slip among the plurality of wheels, based on a comparison among the states of the respective wheels, detected by the wheel state detecting means; and camber angle adjusting means that, when it is determined by the determining means that there is the wheel that is likely to slip, actuates the camber angle adjusting device to adjust the camber angle of the wheel determined to be likely to slip so as to be inclined at a predetermined angle toward a negative side or a positive side.
A control device recited in claim 2 is configured so that, in the control device recited in claim 1, the determining means determines whether there is one wheel that is likely to slip among the plurality of wheels, based on a comparison among the states of the respective wheels, detected by the wheel state detecting means.
A vehicle recited in claim 3 includes: a wheel; a camber angle adjusting device that adjusts a camber angle of the wheel; wheel state detecting means that detects a state of the wheel; and the control device recited in claim 1 or 2, wherein the wheel is configured so that a curvature of a tread surface is larger than a predetermined value, and the camber angle adjusting device is configured so that a camber rotation axis of the wheel is set below a rotation axis of the wheel.
A vehicle recited in claim 4 includes: a wheel; a camber angle adjusting device that adjusts a camber angle of the wheel; wheel state detecting means that detects a state of the wheel; and the control device recited in claim 1 or 2, wherein the wheel is configured so that a curvature of a tread surface is smaller than a predetermined value, and the camber angle adjusting device is configured so that a camber rotation axis of the wheel is set above a rotation axis of the wheel.
A vehicle recited in claim 5 is configured so that, in the vehicle recited in claim 3 or 4, the wheel state detecting means detects a rotational speed of the wheel.

A vehicle recited in claim 6 is configured so that, in the vehicle recited in claim 3 or 4, the wheel state detecting means detects a ground contact force on the wheel.

A vehicle recited in claim 7 is **characterized in that**, in the vehicle recited in claim 3 or 4, a suspension that suspends the wheel on a vehicle body is provided and the wheel state detecting means detects a stroke of the suspension.

Advantageous Effects of the Invention

With the control device recited in claim 1, it is determined by the determining means whether there is a wheel that is likely to slip among the plurality of wheels, based on a comparison among the states of the respective wheels, detected by the wheel state detecting means of the vehicle. Here, when it is determined that there is a wheel that is likely to slip, the camber angle adjusting device is actuated by the camber angle adjusting means to adjust the camber angle of the wheel determined to be likely to slip so as to be inclined at a predetermined angle toward a negative side or a positive side.

Here, by setting a camber angle inclined toward a negative side or a positive side for a wheel, it is possible to increase the contact pressure of the wheel. Alternatively, by setting a camber angle inclined toward a negative side or a positive side for a wheel, it is possible to reduce a vehicle height and lower the center of gravity.

Thus, by setting a camber angle inclined toward a negative side or a positive side for a wheel that is likely to slip during travelling, it is possible to increase the ground contact force. Thus, there is an advantage that it is possible to prevent a temporary slip of a wheel during travelling.

In addition, with the control device recited in claim 1, it is determined whether there is a wheel that is likely to slip among the plurality of wheels, based on a comparison among the wheels during travelling, that is, relative states of the wheels during travelling, so that it is easy to find a wheel that is likely to slip, and, particularly, determination accuracy for a situation that a load on a part of wheels temporarily drops because of a road surface condition (for example, a depression on a road surface or presence of a portion that has a partially low friction coefficient on a road surface), or the like, improves. Thus, there is an advantage that it is possible to perform predictive control that is highly reliable for slip prevention.

With the control device recited in claim 2, in addition to the advantage effect obtained from the control device recited in claim 1, the following advantageous effect is obtained. It is determined by the determining means whether there is one wheel that is likely to slip among the plurality of wheels, based on a comparison among the states of the respective wheels, detected by the wheel state detecting means. Thus, when any one of the wheels is likely to slip during travelling, a slip of that wheel is prevented, so that there is an advantage that running stability is ensured.

With the vehicles recited in claims 3 and 4, both include the control device recited in claim 1 or 2, so that the same advantageous effect as the advantageous effect obtained from the above described control device recited in claim 1 or 2 is obtained.

Furthermore, with the vehicle recited in claim 3, the curvature of the tread surface of the wheel is configured to be larger than a predetermined value, and the camber angle adjusting device in which the camber rotation axis of the wheel is set below the rotation axis of the wheel is used, so that, by setting a camber angle inclined toward a negative side or a positive side for a wheel that is likely to slip during travelling, the contact pressure of the wheel tends to be increased, and, as a result, there is an advantage that it is possible to effectively prevent a temporary slip of a wheel during travelling.

On the other hand, with the vehicle recited in claim 4, the curvature of the tread surface of the wheel is configured to be smaller than a predetermined value, and the camber angle adjusting device in which the camber rotation axis of the wheel is set above the rotation axis of the wheel is used, so that, by setting a camber angle inclined toward a negative side or a positive side for a wheel that is likely to slip during travelling, a vehicle height tends to be reduced (that is, the center of gravity tends to be lowered), and, as a result, there is an advantage that it is possible to effectively prevent a temporary slip of a wheel during travelling.

With the vehicle recited in claim 5, in addition to the advantageous effect obtained from the vehicle recited in claim 3 or 4, the following advantageous effect is obtained. The rotational speed of the wheel is detected by the wheel state detecting means as the state of the wheel, and it is determined by the determining means whether there is a wheel that is likely to slip among a plurality of the wheels, based on a comparison among the rotational speeds of the respective wheels. Here, the rotational speed of the wheel is a numerical value that reflects a likelihood of a slip of the wheel during travelling, so that, by utilizing the rotational speed of the wheel as the state of the wheel, compared among the wheels, a likelihood of a temporary slip during travelling is easily found, and there is an advantage that it is possible to effectively prevent a slip.

With the vehicle recited in claim 6, in addition to the advantageous effect obtained from the vehicle recited in claim 3 or 4, the following advantageous effect is obtained. The ground contact force on the wheel is detected by the wheel state detecting means as the state of the wheel, and it is determined by the determining means whether there is a wheel that is likely to slip among a plurality of the wheels, based on a comparison among the ground contact forces on the respective wheels. Here, the ground contact force on the wheel is a numerical value that reflects a likelihood of a slip of the wheel during travelling, so that, by utilizing the ground contact force on the wheel as the state of the wheel, compared among the wheels, a likelihood of a temporary slip during travelling is easily found, and there is an advantage that it is possible to effectively prevent a slip.

With the vehicle recited in claim 7, in addition to the advantageous effect obtained from the vehicle recited in claim 3 or 4, the following advantageous effect is obtained. The stroke of the suspension that suspends between the wheel and the vehicle body is detected by the wheel state detecting means as the state of the wheel, and it is determined by the determining means whether there is a wheel that is likely to slip among a plurality of the wheels, based on a comparison among the strokes of the suspensions with respect to the respective wheels. Here, the stroke of the suspension is a numerical value that reflects a likelihood of a slip of the wheel during travelling, so that, by utilizing the stroke of the suspension as the state of the wheel, compared among the wheels, a likelihood of a temporary slip during travelling is easily found, and there is an advantage that it is possible to effectively prevent a slip.

Brief Description of Drawings

[FIG. 1] FIG. 1 is a schematic view that schematically shows the top view of a vehicle equipped with a control device in a first embodiment of the invention.

[FIG. 2] FIG. 2 is a front view of a suspension device.

[FIG. 3] FIG. 3 is a block diagram that shows an electrical configuration of the control device.

[FIG. 4] FIG. 4 is a flowchart that shows a slip prevention process of the first embodiment.

[FIG. 5] FIG. 5(a) is a schematic front view that shows a wheel of the first embodiment in a state where a camber angle is a normal angle, and FIG. 5(b) is a schematic front view that shows the wheel of the first embodiment, of which the camber angle is adjusted negatively.

[FIG. 6] FIG. 6(a) is a schematic front view that shows a wheel of a second embodiment in a state where a camber angle is a normal angle, and FIG. 6(b) is a schematic front view that shows the wheel of the second embodiment, of which the camber angle is adjusted negatively.

[FIG. 7] FIG. 7 is a flowchart that shows a slip prevention process of a third embodiment.

[FIG. 8] FIG. 8 is a flowchart that shows a slip prevention process of a fourth embodiment.

[FIG. 9] FIG. 9 is a schematic view that schematically shows a vehicle equipped with a vehicle control device in a fifth embodiment of the invention.

[FIG. 10] FIG. 10(a) is a cross-sectional view of a wheel, and FIG. 10(b) is a schematic view that schematically illustrates a method of adjusting a rudder angle and camber angle of the wheel.

[FIG. 11] FIG. 11 is a block diagram that shows an electrical configuration of the vehicle control device.

[FIG. 12] FIG. 12 is a schematic view that schematically shows the top view of the vehicle.

[FIG. 13] FIG. 13 is a schematic view that schematically shows the front view of the vehicle, and shows a state where negative cambers are set for the wheels.

[FIG. 14] FIG. 14 is a schematic view that schematically shows the front view of the vehicle, and shows a state where positive cambers are set for the wheels.

[FIG. 15] FIG. 15 is a flowchart that shows a camber control process.

[FIG. 16] FIG. 16 is a flowchart of fail-safe control when a camber angle becomes uncontrollable during travelling straight ahead.

[FIG. 17] FIG. 17 is a flowchart of fail-safe control when a camber angle becomes uncontrollable during turning.

[FIG. 18] FIG. 18 is a diagram that shows a state where a camber angle is set for a wheel in a sixth embodiment of the invention.

[FIG. 19] FIG. 19 is a conceptual view of a vehicle in the sixth embodiment of the invention.

[FIG. 20] FIG. 20 is a plan view that shows a suspension system in the sixth embodiment of the invention.

[FIG. 21] FIG. 21 is a side view of the suspension system in the sixth embodiment of the invention.

[FIG. 22] FIG. 22 is a perspective view that shows the suspension system in the sixth embodiment of the invention.

[FIG. 23] FIG. 23 is a cross-sectional view that shows the structure of a front bushing in the sixth embodiment of the invention.

[FIG. 24] is a cross-sectional view that shows the structure of a rear bushing in the sixth embodiment of the invention.

[FIG. 25] FIG. 25 is a diagram that shows a state where a toe angle is set for the wheel in the sixth embodiment of the invention.

[FIG. 26] FIG. 26 is a first view that illustrates a side force during braking in the sixth embodiment of the invention.

[FIG. 27] FIG. 27 is a second view that illustrates a side force during braking in the sixth embodiment of the invention.

[FIG. 28] FIG. 28 is a perspective view that shows an alternative example of the front bushing in the sixth embodiment of the invention.

[FIG. 29] FIG. 29 is a perspective view that shows a suspension system in a seventh embodiment of the invention.

Description of Reference Numerals

| | |
|---|---|
| 100 | control device |
| 1 | vehicle |
| 2 | wheel |
| 2a | tread surface |
| 2FL | front left wheel (wheel) |
| 2FR | front right wheel (wheel) |
| 2RL | rear left wheel (wheel) |
| 2RR | rear right wheel (wheel) |
| 70 | camber angle adjusting device |
| 81 | wheel speed sensor device (wheel state detecting means) |
| 82 | ground contact force sensor device (wheel state detecting means) |
| 83 | stroke sensor device (wheel state detecting means) |
| S15, S17, S20, S22 | determining means |
| S16, S21 | camber angle adjusting means |
| S18, S23 | camber angle adjusting means |
| S35, S37, S40, S42 | determining means |
| S38, S43 | camber angle adjusting means |
| S55, S57, S60, S62 | determining means |
| S58, S63 | camber angle adjusting means |
| 5100 | vehicle control device |
| 501 | vehicle |
| 502 | wheel |
| 502FL | front wheel (wheel, left wheel) |
| 502FR | front wheel (wheel, right wheel) |
| 502RL | rear wheel (wheel, left wheel) |
| 502RR | rear wheel (wheel, right wheel) |
| 521 | first tread |
| 522 | second tread |
| 504 | camber angle adjusting device |
| 504a | drive actuator (camber angle adjusting device) |
| 504b | camber drive shaft (camber angle adjusting device) |
| 611 | body |
| 631 to 634, 731 | suspension mechanism |
| 636 | tire |
| 639 | high grip area |
| 651 | knuckle unit |
| 652 | upper arm |
| 653 | lower arm |
| 655 | knuckle arm |
| 656 | camber axis |
| 657 | camber plate |
| 658 | spring |
| 662a, 662b, 664a, 664b, 762a, 762b | bushing |
| 785 | arm |
| GND | road surface |
| WLF, WRF, WLB, WRB | wheel |
| α | toe angle |

Best Modes for Carrying out the Invention

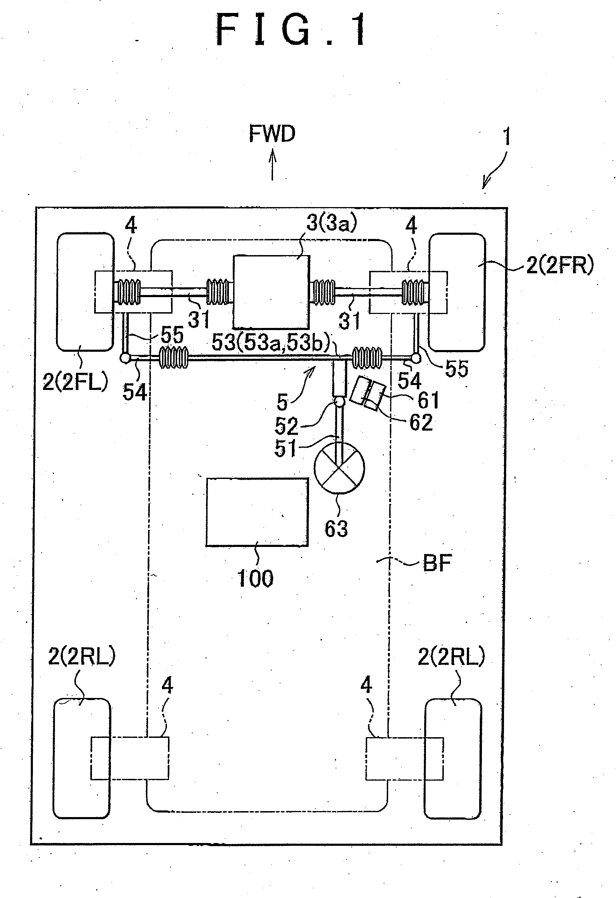

Hereinafter, preferred embodiments of the invention will be described with reference to the accompanying drawings. FIG. 1 is a schematic view that schematically shows the top view of a vehicle 1 equipped with a control device 100 in a first embodiment of the invention. Note that the arrow FWD in FIG. 1 indicates the forward direction of the vehicle 1.

First, a schematic configuration of the vehicle 1 will be described. As shown in FIG. 1, the vehicle 1 mainly includes a vehicle body frame BF, a plurality of (four in the present embodiment) wheels 2 supported by the vehicle body frame BF, a wheel driving device 3 that drives part of those wheels 2 (left and right front wheels 2FL and 2FR in the present embodiment) for rotation, suspension devices 4 that suspend the wheels 2 on the vehicle body frame BF and that independently adjust the camber angles of the respective wheels 2, and a steering device 5 that steers part of the wheels 2 (left and right front wheels 2FL and 2FR in the present embodiment) in accordance with operation of a steering 63.

The vehicle 1 is configured so that the suspension devices 4 are able to independently adjust the camber angles of the respective wheels 2 as described above, so that it is possible to adjust the camber angles of the respective wheels 2 where appropriate to improve running performance. Particularly, the vehicle 1 according to the present embodiment is configured so that, when one of all the wheels 2FL to 2RR is likely to slip, the camber angle of the wheel 2 that is likely to slip is adjusted in a minus direction (negatively) to prevent a slip of that wheel.

Subsequently, a detailed configuration of components will be described. The vehicle body frame BF constitutes the framework of the vehicle 1 and is used for mounting various devices (wheel driving device 3, and the like), and is supported by the suspension devices 4.

As shown in FIG. 1, the wheels 2 include four wheels, that is, left and right front wheels 2FL and 2FR that are arranged at the front side (arrow FWD side) of the vehicle body BF and left and right rear wheels 2RL and 2RR that are arranged at the rear side (opposite to the arrow FWD side) of the vehicle body frame BF. In addition, the left and right front wheels 2FL and 2FR are configured as drive wheels that are driven for rotation by rotational driving force applied from the wheel driving device 3, while the left and right rear wheels 2RL and 2RR are configured as driven wheels that are driven as the vehicle 1 travels.

Note that, in the present embodiment, a wheel having a tread surface (tread) 2a with a large curvature is employed as each wheel 2. Thus, by inclining the wheel 2 with respect to a road surface, a ground contact width (ground contact area) is reduced and the contact pressure of the wheel 2 is increased, so that it is possible to increase a ground contact force on that wheel.

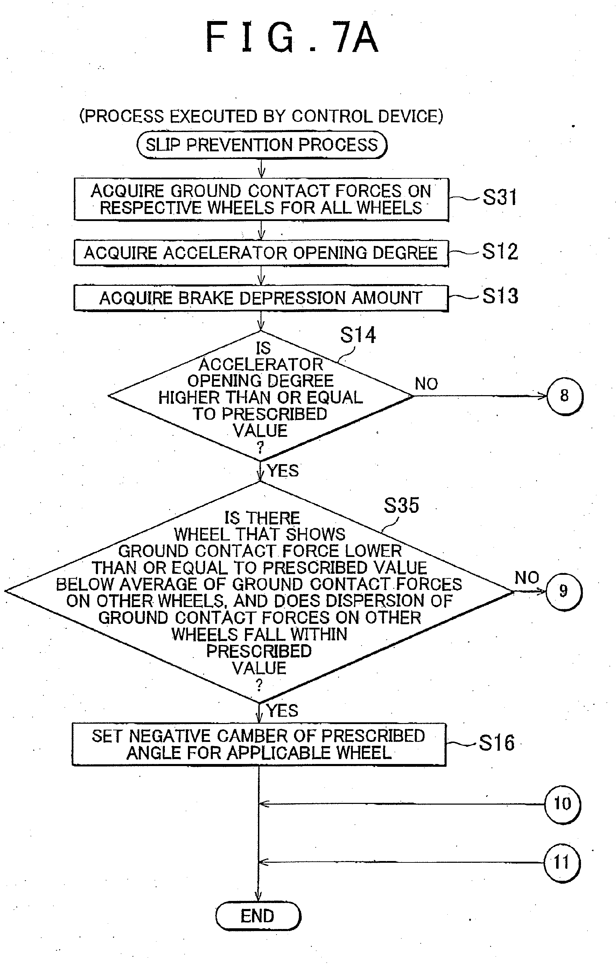

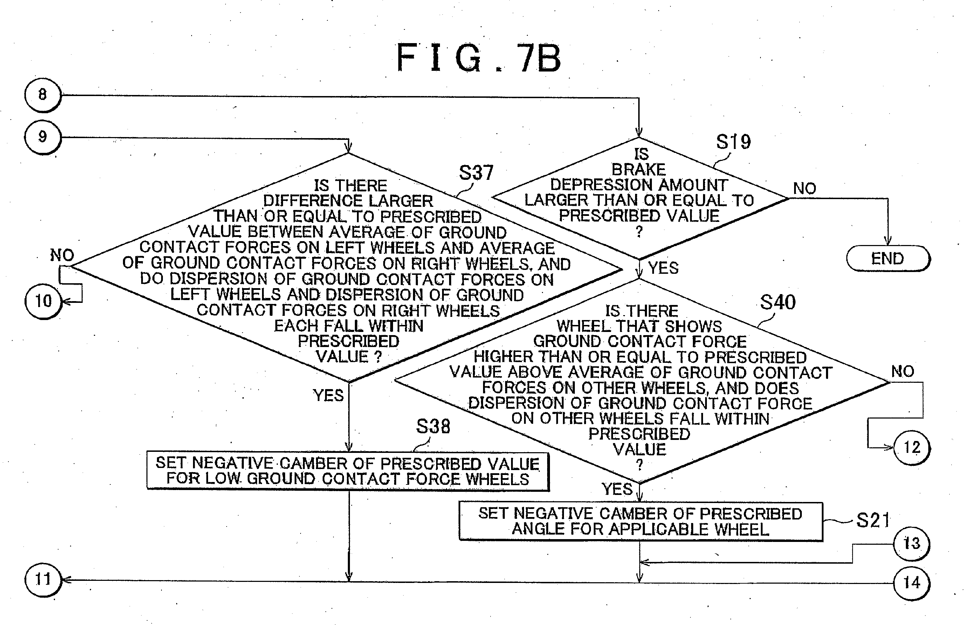

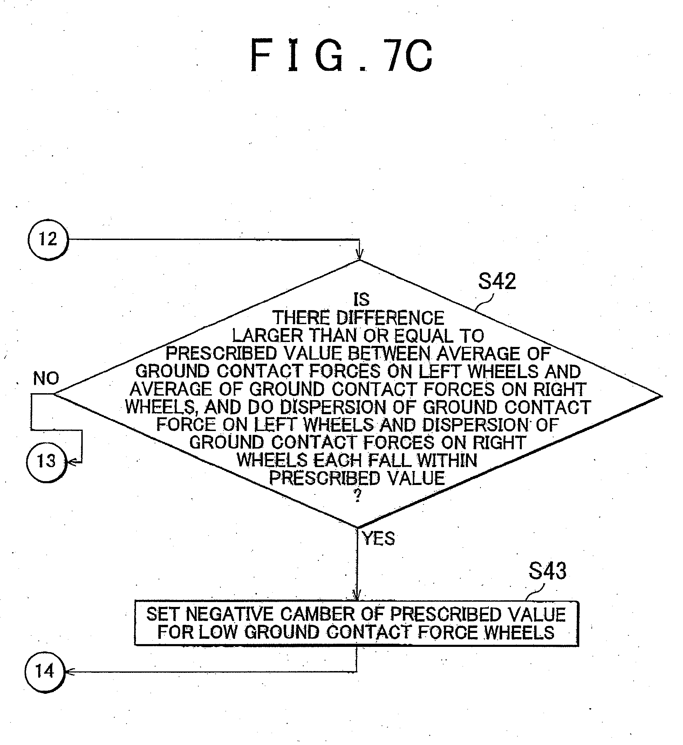

As described above, the wheel driving device 3 is a device for applying rotational driving force to the left and right front wheels 2FL and 2FR to drive the left and right front wheels 2FL and 2FR for rotation, and is formed of an electric motor 3a as will be described later (see FIG. 7). As shown in FIG. 1, the electric motor 3a is connected to the left and right front wheels 2FL and 2FR via a differential gear (not shown) and a pair of drive shafts 31.

When a driver operates an accelerator pedal 61, rotational driving force is applied from the wheel driving device 3 to the left and right front wheels 2FL and 2FR, and those left and right front wheels 2FL and 2FR are driven for rotation at a rotational speed corresponding to a depressed state of the accelerator pedal 61. Note that a rotational difference between the left and right front wheels 2FL and 2FR is absorbed by the differential gear.

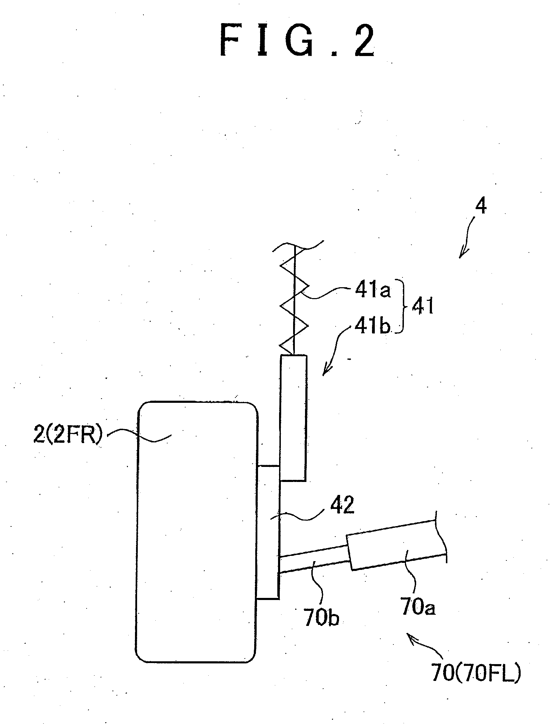

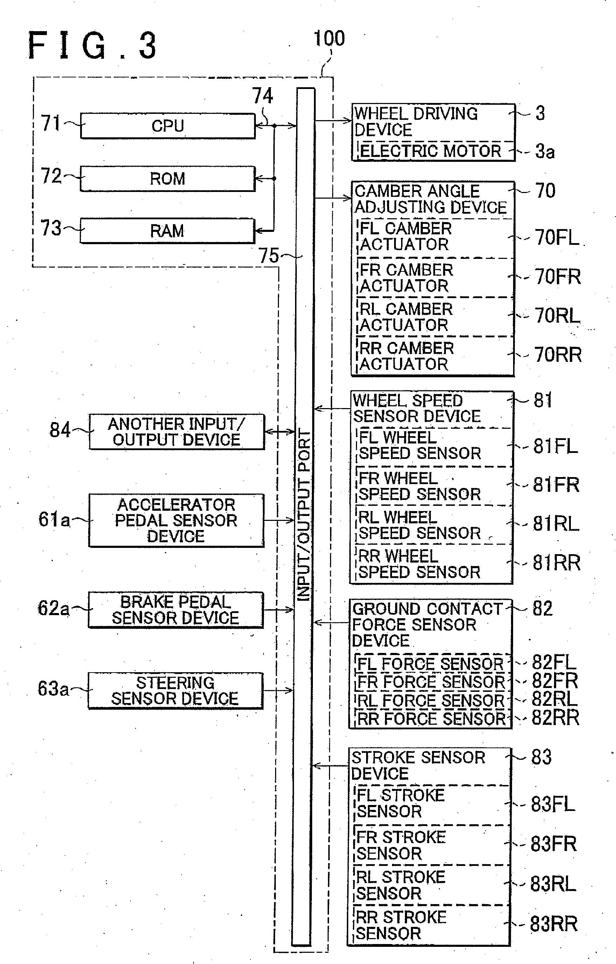

The suspension devices 4 are devices that function as so-called suspensions, and are provided corresponding to the respective wheels 2 as shown in FIG. 1. The suspension devices 4 in the present embodiment include camber angle adjusting devices 70 (see FIG. 2 and FIG. 3) that serve as a camber angle adjusting device of the invention, and are configured to be able to adjust the camber angles of the wheels 2 by the camber angle adjusting devices 70.

Here, a detailed configurations of the suspension devices 4 will be described with reference to FIG. 2. FIG. 2 is a front view of the suspension device 4; note that the configurations of the suspension devices 4 are common to one another, so that, here, the suspension device 4 associated with the right front wheel 2FR is shown in FIG. 2 as a representative example. In addition, in FIG. 2, for the sake of easy understanding of the invention, the drive shaft 31, a lower arm, and the like, are omitted to simplify the drawing.

Each of the suspension devices 4 in the present embodiment is configured as a strut type suspension, and, as shown in FIG. 2, includes a strut member 41 that extends in the substantially vertical direction of the vehicle 1, a knuckle 42 that serves as a wheel support member for pivotably supporting the wheel 2 and the lower arm (not shown) that extends in the substantially vehicle width direction of the vehicle 1.

The strut member 41 is formed of a suspension spring 41a, a shock absorber 41b that damps the vibrations of the suspension spring 41a, and the like. A lower end 41 (cylinder side of the shock absorber 41b) of the strut member 41 is rigidly coupled to the knuckle 42. On the other hand, although not shown in the drawing, an upper end (piston rod side of the shock absorber 41b) of the strut member 41 is pivotally coupled to the vehicle body frame BF.

In addition, the suspension devices 4 in the present embodiment include the camber angle adjusting devices 70 that adjust the camber angles of the wheels 2, and are configured to be able to independently adjust the camber angles of the respective wheels 2. An FR actuator 70FR is formed of a hydraulic cylinder, and a rod portion 70b is pivotally coupled to the knuckle 42 via a joint portion (universal joint, or the like) (not shown). On the other hand, a body portion 70a of the FR actuator 70FR is pivotally coupled to a vehicle body frame side.

With the suspension devices 4 that include the camber angle adjusting devices 70, as the FL to RR actuators 70FL to 70RR are extended, the wheels 2 (2FL to 2RR) are oscillated about predetermined camber axes, and the camber angles are adjusted in a minus direction (negatively). On the other hand, as the FL to RR actuators 70FL to 70RR are retracted, the camber angles are adjusted in a plus direction (positively).

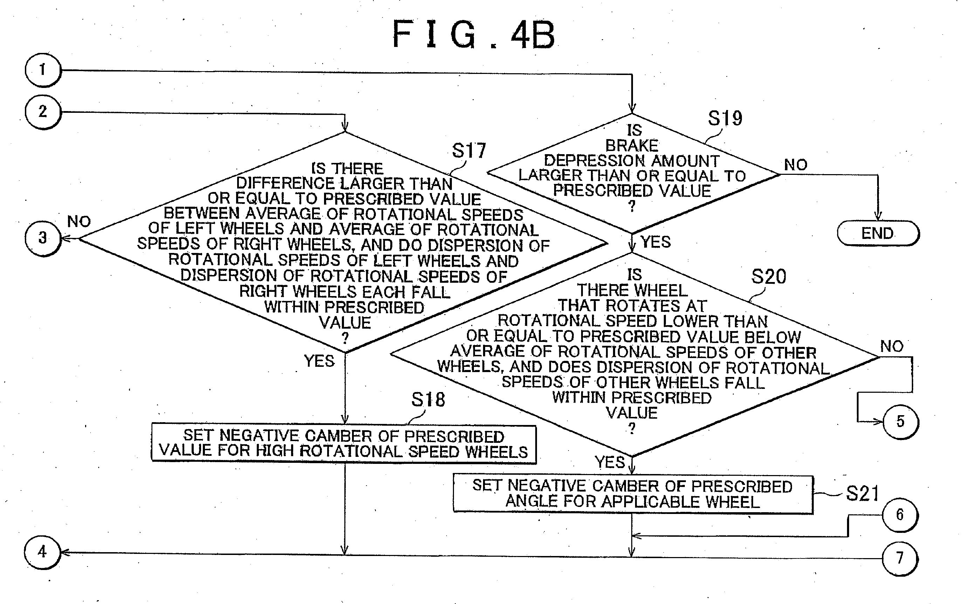

Referring back to FIG. 1, the description will be continued. The steering device 5 is formed of a rack-and-pinion type mechanism, and mainly includes a steering shaft 51, a hook joint 52, a steering gear 53, tie rods 54, coupling members 55 and the knuckles 42 (see FIG. 4(b)).

With the steering device 5, driver's operation of the steering 63 is initially transmitted to the hook joint 52 via the steering shaft 51, and is transmitted to a pinion 53a of the steering gear 53 as rotational motion while the angle is changed by the hook joint 52. Then, the rotational motion transmitted to the pinion 53a is converted into linear motion of a rack 53b, and the rack 53b linearly moves. Thus, the tie rods 54 connected to both ends of the rack 53b move to push or pull the knuckles 42 via the coupling members 55 to thereby adjust the steering angle of the wheels 2.

The steering 63 is an operating member operated by the driver. As the steering 63 is operated, the wheels 2 are steered by the above described steering device 5. In addition, the accelerator pedal 61 and a brake pedal 62 are operating members operated by the driver, and the acceleration amount, braking amount, and the like, of the vehicle 1 are determined based on the depressed states (depression amounts, depression speeds, and the like) of the respective pedals 61 and 62.

The control device 100 is a device for controlling the components of the above configured vehicle 1, and, for example, detects the depressed states of the respective pedals 61 and 62 and then controls the wheel driving device 3 based on the detection results to thereby drive the wheels 2 for rotation.

In addition, the control device 100 of the present embodiment is configured to determine whether there is the wheel 2 that is likely to slip, based on a comparison among the states of the respective wheels 2, indicated by the rotational speeds and, when there is the wheel 2 that is likely to slip, control the camber angle adjusting device 70 to adjust the camber angle of the wheel 2 that is likely to slip.

Here, a detailed configuration of the control device 100 of the present embodiment will be described with reference to FIG. 3. FIG. 3 is a block diagram that shows an electrical configuration of the control device 100. As shown in FIG. 3, the control device 100 includes a CPU 71, a ROM 72 and a RAM 73, which are connected to an input/output port 75 via a bus line 74. In addition, a plurality of devices, such as the wheel driving device 3, are connected to the input/output port 75.

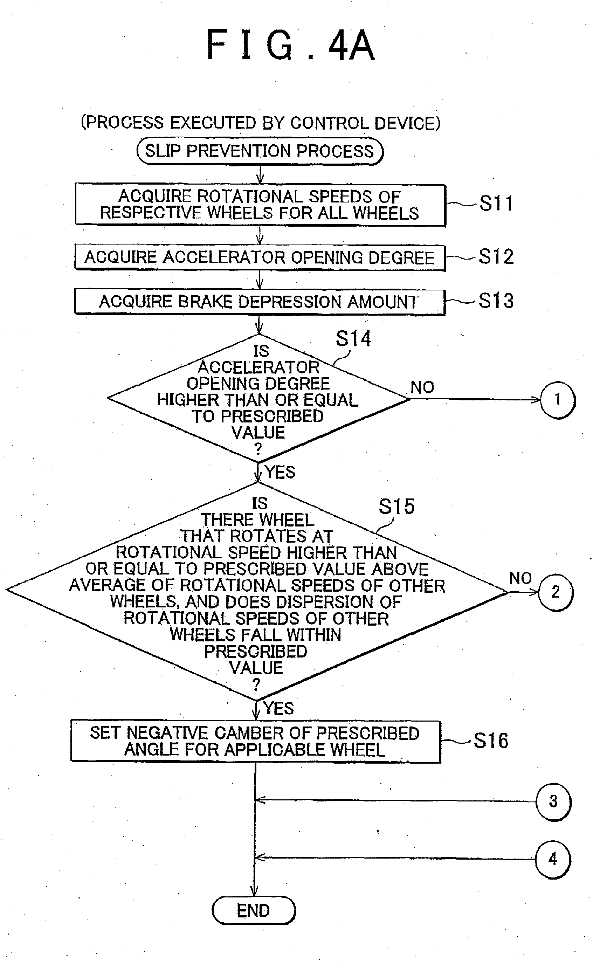

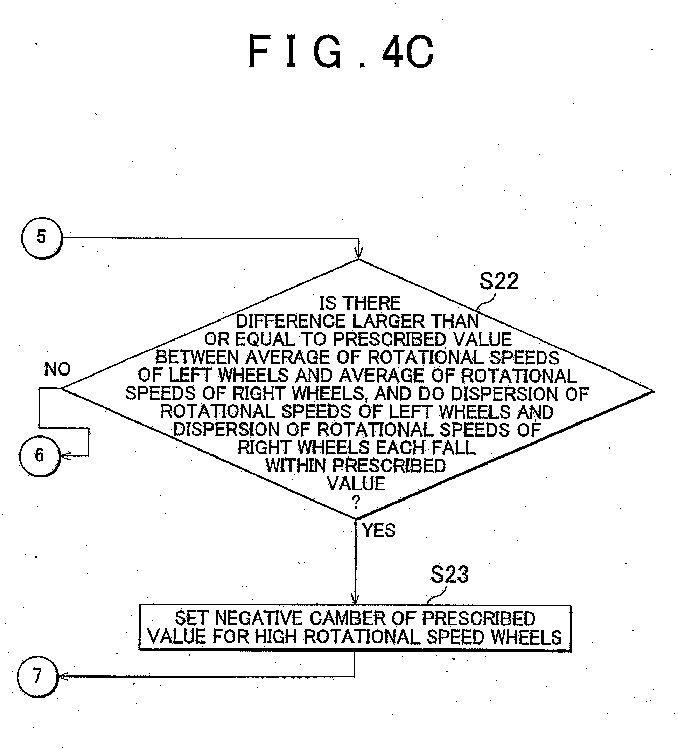

The CPU 71 is a processor that controls the components connected by the bus line 74. The ROM 72 is a non-rewritable nonvolatile memory for storing control programs (for example, a program of a slip prevention process shown in FIG. 4) executed by the CPU 71, fixed value data, and the like. The RAM 73 is a memory for rewritably storing various pieces of data during execution of the control programs.

As described above, the wheel driving device 3 is a device for driving the left and right front wheels 2FL and 2FR (see FIG. 1) for rotation, and mainly includes the electric motor 3a that applies rotational driving force to those left and right front wheels 2FL and 2FR and a control circuit (not shown) that controls the electric motor 3a based on a command from the CPU 71.

The camber angle adjusting devices 70 are devices for adjusting the camber angles of the respective wheels 2 (2FL to 2RR), and function as the camber angle adjusting device of the invention. The camber angle adjusting devices 70 mainly include the four FL to RR actuators 70FL to 70RR and a control circuit (not shown) that controls those actuators 70FL to 70RR based on a command from the CPU 71.

Note that, as described above, the FL to RR actuators 70FL to 70RR each are formed of the hydraulic cylinder that has the body portion 70a and the rod portion 70b. The hydraulic cylinders (FL to RR actuators 70FL to 70RR) further include a hydraulic pump (not shown) that supplies oil (hydraulic pressure) to the hydraulic cylinders and electromagnetic valves (not shown) that change a direction in which oil is supplied from the hydraulic pump to the hydraulic cylinders.

As the control circuit of the camber angle adjusting devices 70 controls driving of the hydraulic pump based on a command from the CPU 71, each hydraulic cylinder is driven to extend or retract by oil (hydraulic pressure) supplied from the hydraulic pump. In addition, as the electromagnetic valve is turned on or off, a direction in which each hydraulic cylinder is driven (extended or retracted) is changed.

The control circuit of the camber angle adjusting devices 70 monitors the extension or retraction amount of each hydraulic cylinder by an extension/retraction sensor (not shown), and stops extension or retraction driving of the hydraulic cylinder that has reached a target value (extension/retraction amount) instructed by the CPU 71. Note that the results of detection by the extension/retraction sensor are output from the control circuit to the CPU 71, and the CPU 71 is able to obtain the camber angle of each wheel 2 based on the detection results.

Wheel speed sensor devices 81 are devices for detecting the rotational speeds (wheel speeds) of the wheels 2 (2FL to 2RR) and for outputting the detection results to the CPU 71, and function as wheel state detecting means of the invention. The CPU 71 is able to obtain the rotational speeds of the wheels 2 (2FL to 2RR) based on the results output from the wheel speed sensor devices 81.

The wheel speed sensor devices 81 include an FL wheel speed sensor 81FL that detects the wheel speed of the left front wheel 2FL, an FR wheel speed sensor 81FR that detects the wheel speed of the right front wheel 2FR, an RL wheel speed sensor 81RL that detects the wheel speed of the left rear wheel 2RL, an RR wheel speed sensor 81RR that detects the wheel speed of the right rear wheel 2RR, and an output circuit (not shown) that processes the results of detection by those wheel speed sensors 81FL to 81RR and outputs the processed results to the CPU 71.

Note that, in the present embodiment, these wheel speed sensors 81FL to 81RR each are configured as an electromagnetic sensor that detects variations in magnetic field of a center rotor (not shown) that rotates with the wheel 2 by a Hall element (not shown).

Ground contact force sensor devices 82 are devices for detecting ground contact forces that occur between the wheels 2 (2FL to 2RR) and a road surface and for outputting the results to the CPU 71. The CPU 71 is able to obtain the ground contact forces on the wheels 2 (2FL to 2RR) based on the results output from the ground contact force sensor devices 82.

The ground contact force sensor devices 82 include an FL force sensor 82FL that detects the ground contact force on the left front wheel 2FL, an FR force sensor 82FR that detects the ground contact force on the right front wheel 2FR, an RL force sensor 82RL that detects the ground contact force on the left rear wheel 2RL, an RR force sensor 82RR that detects the ground contact force on the right rear wheel 2RR, and an output circuit (not shown) that processes the results of detection by those force sensors 82FL to 82RR and outputs the processed results to the CPU 71.

Note that, in the present embodiment, each of the force sensors 82FL to 82RR is configured as a piezoresistance-type triaxial force sensor. Each of these force sensors 82FL to 82RR is arranged on the strut member 41 that holds each wheel 2, and detects the ground contact force on the wheel 2 in the longitudinal direction (vertical direction in FIG. 1), transverse direction (horizontal direction in FIG. 1) and vertical direction (sheet front-back direction in FIG. 1) of the vehicle 1.

Stroke sensor devices 83 are devices for detecting the suspension strokes of the shock absorbers 41b of the strut members 41 that hold the respective wheels 2 and for outputting the detection results to the CPU 71. The CPU 71 is able to obtain the suspension strokes at the respective wheels 2 (2FL to 2RR) based on the results output from the wheel speed sensor devices 81.

The stroke sensor devices 83 include an FL stroke sensor 83FL that detects the suspension stroke at the left front wheel 2FL, an FR stroke sensor 83FR that detects the suspension stroke at the right front wheel 2FR, an RL stroke sensor 83RL that detects the suspension stroke at the left rear wheel 2RL, an RR stroke sensor 83RR that detects the suspension stroke at the right rear wheel 2RR, and an output circuit (not shown) that processes the results of detection by those stroke sensors 83FL to 83RR and outputs the processed results to the CPU 71. Note that, in the present embodiment, these stroke sensors 83FL to 83RR are configured as optical displacement sensors (for example, laser displacement sensors).

An accelerator pedal sensor device 61a is a device for detecting the depressed state of the accelerator pedal 61 and for outputting the detection results to the CPU 71, and includes an angle sensor (not shown) that detects the depression amount of the accelerator pedal 61 and a processing circuit (not shown) that processes the results of detection by the angle sensor and outputs the processed results to the CPU 71. The CPU 71 is able to calculate the accelerator opening degree from the results of detection (the depression amount of the accelerator pedal 61) by the accelerator pedal sensor device 61a.

A brake pedal sensor device 62a is a device for detecting the depressed state of the brake pedal 62 and for outputting the detection results to the CPU 71, and includes an angle sensor (not shown) that detects the depression amount of the brake pedal 62 and a processing circuit (not shown) that processes the results of detection by the angle sensor and outputs the processed results to the CPU 71. The CPU 71 is able to calculate the brake depression amount from the results of detection (the depression amount of the brake pedal 62) by the brake pedal sensor device 62a.

A steering sensor device 63a is a device for detecting the operated state of the steering 63 and for outputting the detection results to the CPU 71, and includes an angle sensor (not shown) that detects the rotation angle of the steering 63 associated with the rotation direction and a processing circuit (not shown) that processes the results of detection by the angle sensor and outputs the processed results to the CPU 71.

Note that, in the present embodiment, each angle sensor is configured as a contact-type potentiometer that uses electrical resistance. The CPU 71 is able to obtain the depression amounts of the pedals 61 and 62 and the rotation angle of the steering 63 based on the results of detection by the angle sensors, input from the sensor devices 61a, 62a and 63a, and is able to obtain the depression speeds of the respective pedals 61 and 62 and the rotation speed of the steering 63 by differentiating the detection results with respect to time.

In addition, an acceleration sensor device that detects the longitudinal acceleration or lateral acceleration of the vehicle 1, an optical sensor that measures the attitude (inclination, or the like) of the vehicle 1 (vehicle body frame BF) with respect to a road surface in a non-contact manner, or the like, is exemplified as an input/output device 84.

Subsequently, the slip prevention process executed by the control device 100 (CPU 71) having the above configuration will be described with reference to FIG. 4. FIG. 4 is a flowchart that shows the slip prevention process. The slip prevention process is repeatedly executed (for example, at an interval of 0.2 ms) by the CPU 71 while the power of the control device 100 is turned on.

As shown in FIG. 4, in this slip prevention process, first, for all the wheels 2, the rotational speeds of the respective wheels 2FL to 2RR are acquired (S11). Specifically, in S11, the rotational speeds of the respective wheels 2FL to 2RR are acquired based on the output values from the wheel speed sensor devices 81 that serve as the wheel state detecting means of the invention.

After the process of S11, the accelerator opening degree is acquired based on the output value from the accelerator pedal sensor device 61a (S12), and the brake depression amount is acquired based on the output value from the brake pedal sensor device 62a (S13).

After the process of S13, it is determined whether the accelerator opening degree acquired by the process of S12 is higher than or equal to a prescribed value (S14). When the result of determination by the process of S14 shows that the accelerator opening degree is higher than or equal to the prescribed value (S14: Yes), the vehicle 1 is accelerating and therefore, it is determined whether there is one wheel (one of the wheels 2FL to 2RR) that rotates at a rotational speed higher than or equal to a prescribed value above the average of the rotational speeds of the other wheels (the other three wheels) (for example, rotational speed higher than or equal to about 120% of the average of the rotational speeds of the other wheels) and a dispersion of the rotational speeds of those other wheels falls within a prescribed value (S15).

By executing the determining process of this S15, it is possible to determine whether there is one wheel that is likely to slip among all the wheels 2 (2FL to 2RR) during acceleration, based on a comparison among the states of the respective wheels 2 (specifically, the rotational speeds of the respective wheels 2). Note that the process of S15 corresponds to the determining means of the invention.

When the result of determination by the process of S15 shows that there is one wheel that rotates at a rotational speed higher than or equal to the prescribed value above the average of the rotational speeds of the other wheels and a dispersion of the rotational speeds of those other wheels falls within the prescribed value (S15: Yes), it is determined that there is one wheel that is likely to slip among all the wheels 2 (2FL to 2RR), a negative camber of a prescribed angle (for example, 5°) is set for that wheel (wheel that is likely to slip) (S16), and then this slip prevention process is terminated. Note that the process of S16 corresponds to camber angle adjusting means of the invention.

On the other hand, when the result of determination by the process of S15 shows that there is not a wheel that rotates at a rotational speed higher than or equal to the prescribed value above the average of the rotational speeds of the other wheels or a dispersion of the rotational speeds of the compared other wheels exceeds the prescribed value (S15: No), the process proceeds to the process of S17.

In the process of S17, it is determined whether there is a difference larger than or equal to a prescribed value between the average of the rotational speeds of the left wheels 2FL and 2RL and the average of the rotational speeds of the right wheels 2FR and 2RR (for example, the rotational speeds of the wheels on one side are higher than 120% of the rotational speeds of the wheels on the other side) and a dispersion of the rotational speeds of the left wheels 2FL and 2RL and a dispersion of the rotational speeds of the right wheels 2FR and 2RR each fall within a prescribed value (S17).

By executing the determining process of this S17, it is possible to determine whether there is a wheel that is likely to slip among all the wheels 2 (2FL to 2RR) during acceleration, based on a comparison among the states of the respective wheels 2, more specifically, to determine whether either the left wheels 2FL and 2RL or the right wheels 2FR and 2RR are likely to slip during acceleration. Note that the process of S17 corresponds to the determining means of the invention.

When the result of determination by the process of S17 shows that there is a difference larger than or equal to the prescribed value between the average of the rotational speeds of the left wheels 2FL and 2RL and the average of the rotational speeds of the right wheels 2FR and 2RR and a dispersion of the rotational speeds of the left wheels 2FL and 2RL and a dispersion of the rotational speeds of the right wheels 2FR and 2RR each fall within the prescribed value (S17: Yes), it is determined that either the left wheels 2FL and 2RL or the right wheels 2FR and 2RR are likely to slip, a negative camber of a prescribed angle (for example, 5°) is set for the high-rotational speed wheels (the left wheels 2FL and 2RL or the right wheels 2FR and 2RR) that are likely to slip (S18), and then this slip prevention process is terminated. Note that the process of S18 corresponds to the camber angle adjusting means of the invention.

On the other hand, when the result of determination by the process of S17 shows that there is not a difference larger than or equal to the prescribed value between the average of the rotational speeds of the left wheels 2FL and 2RL and the average of the rotational speeds of the right wheels 2FR and 2RR or at least one of a dispersion of the rotational speeds of the left wheels 2FL and 2RL and a dispersion of the rotational speeds of the right wheels 2FR and 2RR is a dispersion exceeding the prescribed value (S17: No), it is determined that neither the left wheels 2FL and 2RL nor the right wheels 2FR and 2RR are likely to slip, and this slip prevention process is terminated without adjusting the camber angles of the wheels 2.

In addition, when the result of determination by the process of S14 shows that the accelerator opening degree is lower than the prescribed value (S14: No), it is determined whether the brake depression amount acquired by the process of S13 is larger than or equal to the prescribed value (S19). When the result of determination by the process of S19 shows that the brake depression amount is smaller than the prescribed value (S19: No), it is not in a state of making slip determination and therefore, this slip prevention process is terminated.

On the other hand, when the result of determination by the process of S19 shows that the brake depression amount is larger than or equal to the prescribed value (S19: Yes), the vehicle 1 is decelerating and therefore, it is determined whether there is one wheel (one of the wheels 2FL to 2RR) that rotates at a rotational speed lower than or equal to a prescribed value below the average of the rotational speeds of the other wheels (the other three wheels) (for example, rotational speed lower than or equal to about 80% of the average of the rotational speeds of the other wheels) and a dispersion of the rotational speeds of those other wheels falls within a prescribed value (S20).

By executing the determining process of this S20, it is possible to determine whether there is one wheel that is likely to slip among all the wheels 2 (2FL to 2RR) during deceleration, based on a comparison among the states of the respective wheels 2 (specifically, the rotational speeds of the respective wheels 2). Note that the process of S20 corresponds to the determining means of the invention.

When the result of determination by the process of S20 shows that there is one wheel that rotates at a rotational speed lower than or equal to the prescribed value below the average of the rotational speeds of the other wheels and a dispersion of the rotational speeds of those other wheels falls within the prescribed value (S20: Yes), it is determined that there is one wheel that is likely to slip among all the wheels 2 (2FL to 2RR), a negative camber of a prescribed angle (for example, 5°) is set for that wheel (wheel that is likely to slip) (S21), and then this slip prevention process is terminated. Note that the process of S21 corresponds to the camber angle adjusting means of the invention.

On the other hand, when the result of determination by the process of S20 shows that there is not a wheel that rotates at a rotational speed lower than or equal to the prescribed value below the average of the rotational speeds of the other wheels or a dispersion of the rotational speeds of the compared other wheels exceeds the prescribed value (S20: No), the process proceeds to the process of S22.

In the process of S22, it is determined whether there is a difference larger than or equal to a prescribed value between the average of the rotational speeds of the left wheels 2FL and 2RL and the average of the rotational speeds of the right wheels 2FR and 2RR and a dispersion of the rotational speeds of the left wheels 2FL and 2RL and a dispersion of the rotational speeds of the right wheels 2FR and 2RR each fall within a prescribed value (S22).

By executing the determining process of this S22, it is possible to determine whether there is a wheel that is likely to slip among all the wheels 2 (2FL to 2RR) during deceleration, based on a comparison among the states of the respective wheels 2, more specifically, to determine whether either the left wheels 2FL and 2RL or the right wheels 2FR and 2RR are likely to slip during deceleration. Note that the process of S22 corresponds to the determining means of the invention.

When the result of determination by the process of S22 shows that there is a difference larger than or equal to the prescribed value between the average of the rotational speeds of the left wheels 2FL and 2RL and the average of the rotational speeds of the right wheels 2FR and 2RR and a dispersion of the rotational speeds of the left wheels 2FL and 2RL and a dispersion of the rotational speeds of the right wheels 2FR and 2RR each fall within the prescribed value (S22: Yes), it is determined that either the left wheels 2FL and 2RL or the right wheels 2FR and 2RR are likely to slip, a negative camber of a prescribed angle (for example, 5°) is set for the high-rotational speed wheels (the left wheels 2FL and 2RL or the right wheels 2FR and 2RR) that are likely to slip (S23), and then this slip prevention process is terminated. Note that the process of S23 corresponds to camber angle adjusting means of the invention.

On the other hand, when the result of determination by the process of S22 shows that there is not a difference larger than or equal to the prescribed value between the average of the rotational speeds of the left wheels 2FL and 2RL and the average of the rotational speeds of the right wheels 2FR and 2RR or at least one of a dispersion of the rotational speeds of the left wheels 2FL and 2RL and a dispersion of the rotational speeds of the right wheels 2FR and 2RR is a dispersion exceeding the prescribed value (S22: No), it is determined that neither the left wheels 2FL and 2RL nor the right wheels 2FR and 2RR are likely to slip, and this slip prevention process is terminated without adjusting the camber angles of the wheels 2.

As described above, with this slip prevention process, when it is determined that there is a wheel that is likely to slip among all the wheels 2 during travelling (during acceleration or during deceleration) in the determination process of S15, S17, S20 or S22, a negative camber (that is a camber angle in a minus direction) of a prescribed angle is set for the wheel that is likely to slip.

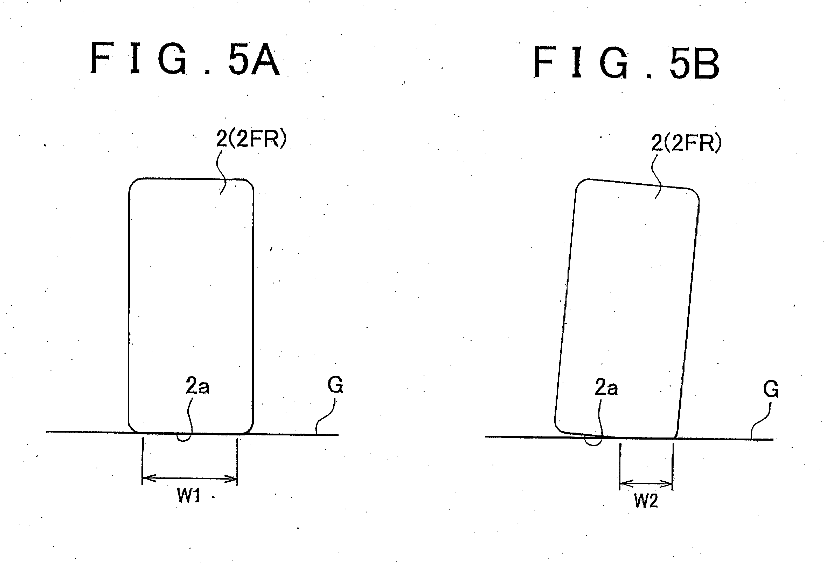

Here, an advantageous effect obtained by setting a negative camber for a wheel that is likely to slip will be described with reference to FIG. 5. FIG. 5(a) is a schematic front view that shows the wheel 2 in a state where the camber angle is a normal angle (substantially 0° in the present embodiment), and FIG. 5(b) is a schematic front view that shows the wheel 2 of which the camber angle is adjusted negatively (in a minus direction) by the above described slip prevention process. Note that FIG. 5 shows the right front wheel 2FR as a representative example of the wheel 2.

In the present embodiment, a wheel having the tread surface (tread) 2a with a large curvature is used as each wheel 2. When the wheel 2 having the tread surface 2a with a large curvature is used in this way, by setting a negative camber for the wheel 2 to incline the wheel 2 with respect to a road surface, the wheel 2 is deformed by the inclination. As a result, while a ground contact width between the wheel 2 and a road surface G is W1 (FIG. 5(a)) when the camber angle of the wheel 2 is a normal angle, a ground contact width with the road surface G is reduced to W2 (FIG. 5(b)). Thus, the contact pressure of the wheel 2 increases as compared with that when the ground contact width is W1 (that is, in the case of a normal angle).

Thus, in the vehicle 1 that has the wheels 2, of which the contact pressure increases as a camber angle is set, by setting a negative camber for the wheel 2 that is likely to slip during travelling, the contact pressure of the wheel 2 is increased and the ground contact force is increased, so that a load drop is suppressed and it is possible to prevent a temporary slip of a wheel during travelling.

Note that, when a camber angle is set for the wheel 2 having the tread surface 2a with a large curvature, the closer the camber rotation axis is to the road surface G, the more effectively the contact pressure is increased. Thus, when the wheel 2 having the tread surface 2a with a large curvature is used, for example, the camber rotation axis is desirably set below the rotation axis of the wheel 2, and is more desirably set near the road surface G.

As described above, according to the first embodiment, when it is determined that there is a wheel that is likely to slip among all the wheels 2 during travelling (during acceleration or during deceleration), a negative camber of a prescribed angle is set for the wheel that is likely to slip. Here, the wheel 2 that has the tread surface 2a with a large curvature and that increases in contact pressure by setting the camber angle is used as the wheel 2, so that the contact pressure increases and the ground contact force increases by setting a negative camber. Thus, a load drop during travelling is suppressed, and it is possible to prevent a slip of the wheel.

In addition, according to the first embodiment, it is determined whether there is a wheel that is likely to slip among all the wheels 2 (four wheels of 2FL to 2RR), based on a comparison among the states (rotational speeds) of the respective wheels 2 during travelling, that is, relative states of the wheels during travelling, so that it is easy to find the wheel that is likely to slip. Particularly, determination accuracy for a situation that a load on a part of wheels 2 temporarily drops because of a road surface condition (for example, a depression on a road surface or presence of a portion that has a low friction coefficient on a road surface), or the like, improves. Thus, it is possible to perform predictive control that is highly reliable for slip prevention.

Here, according to the first embodiment, it is determined whether there is one wheel that is likely to slip, based on a comparison with the states (rotational speeds) of the other three wheels, so that, when any one of the wheels 2FL to 2RR is likely to slip during travelling, a slip of the wheel is prevented, so that it is possible to ensure running stability.

In addition, according to the first embodiment, it is determined whether either the left wheels 2FL and 2RL or the right wheels 2FR and 2RR are likely to slip, based on a comparison between the states of the wheels (left wheels 2FL and 2RL) located on the left side and the states of the wheels (right wheels 2FR and 2RR) located on the right side, so that, when the wheels on any one of the left side and the right side are likely to slip during travelling, it is possible to prevent a slip of the wheels and it is possible to ensure running stability.

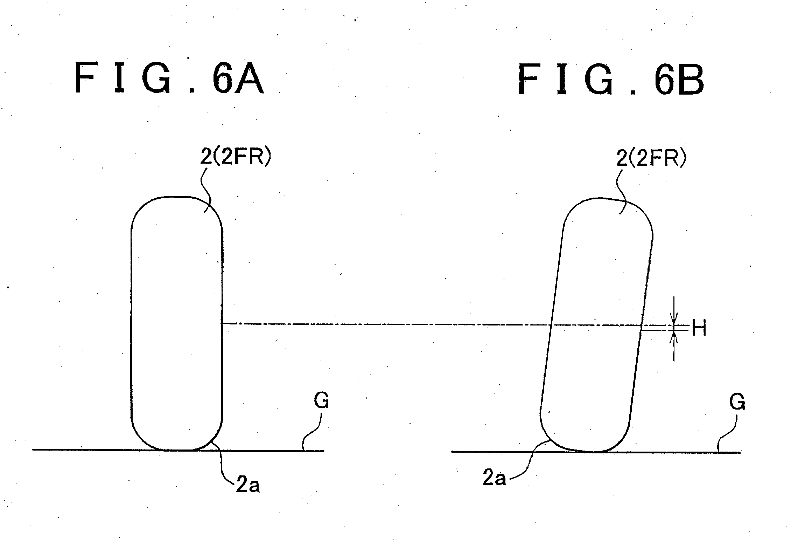

Next, a second embodiment will be described with reference to FIG. 6. In the above described first embodiment, the wheels having the tread surface 2a with a large curvature are used, whereas, in the second embodiment, wheels having a tread surface 2a with a small curvature are used as the wheels 2. Note that like reference numerals are assigned to the same portions as those of the above described first embodiment and the description thereof is omitted.

FIG. 6(a) is a schematic front view that shows the wheel 2 of the second embodiment in a state where the camber angle is a normal angle (substantially 0° in the present embodiment), and FIG. 6(b) is a schematic front view that shows the wheel 2 of the second embodiment, of which the camber angle is adjusted negatively (in a minus direction) by the above described slip prevention process. Note that FIG. 6 shows the right front wheel 2FR as a representative example of the wheel 2.

In this way, when the wheel having the tread surface 2a with a small curvature is used as the wheel 2, the vehicle height is reduced by setting a negative camber. That is, as shown in FIG. 6(b), as a negative camber is set for the wheel 2 of the second embodiment, the vehicle height is reduced by H.

Thus, in the vehicle 1 that has a configuration that the vehicle height is reduced by setting a camber angle (in the present embodiment, the wheel 2 having the tread surface 2a with a small curvature), by setting a negative camber for the wheel 2 that is likely to slip during travelling, the vehicle height is reduced and the center of gravity of the vehicle 1 is lowered, so that a load drop is suppressed, and it is possible to prevent a temporary slip of a wheel during travelling.

Note that, when a camber angle is set for the wheel 2 of the second embodiment (that is, wheel having the tread surface 2a with a small curvature), the more the camber rotation axis is distanced from the road surface G, the more effectively the vehicle height is reduced. Thus, when the wheel 2 having the tread surface 2a with a small curvature is used, for example, the camber rotation axis is desirably set above the rotation axis of the wheel 2.

As described above, according to the second embodiment, when it is determined that there is a wheel that is likely to slip among all the wheels 2 during travelling (during acceleration or during deceleration), a negative camber of a prescribed angle is set for the wheel that is likely to slip. Here, the wheel 2 that has the tread surface 2a with a small curvature and that is able to reduce the vehicle height by setting a camber angle is used, so that the vehicle height is reduced and the center of gravity of the vehicle 1 is lowered by setting a negative camber. Thus, a load drop during travelling is suppressed, and it is possible to prevent a slip of the wheel.

Next, a third embodiment will be described with reference to FIG. 7. The above described first embodiment is configured to use the rotational speeds of the respective wheels 2 as the states of the respective wheels 2 for determining a wheel that is likely to slip, whereas, in this third embodiment, the ground contact forces on the respective wheels 2 are used as the states of the respective wheels 2 for determining a wheel that is likely to slip.

Thus, in this third embodiment, the ground contact force sensor devices 82 instead of the wheel speed sensor devices 81 function as the wheel state detecting means. Note that like reference numerals are assigned to the same portions as those of the above described first embodiment and the description thereof is omitted.

FIG. 7 is a flowchart that shows a slip prevention process in the third embodiment. The slip prevention process in this third embodiment, as well as the slip prevention process in the first embodiment, is also repeatedly executed (for example, at intervals of 0.2 ms) by the CPU 71 while the power of the control device 100 is turned on.

As shown in FIG. 7, in the slip prevention process in this third embodiment, first, for all the wheels 2, the ground contact forces on the respective wheels 2FL to 2RR are acquired (S31). Specifically, in S31, the ground contact forces on the respective wheels 2FL to 2RR are acquired based on the output values from the ground contact force sensor devices 82 that serve as the wheel state detecting means of the invention.

After the process of S31, the accelerator opening degree is acquired (S12), the brake depression amount is acquired (S13), and then it is determined whether the accelerator opening degree acquired in the process of S12 is higher than or equal to a prescribed value (S14).

When the result of determination by the process of S14 shows that the accelerator opening degree is higher than or equal to the prescribed value (S14: Yes), it is determined whether there is one wheel (one of the wheels 2FL to 2RR) that shows a ground contact force lower than or equal to a prescribed value below the average of the ground contact forces on the other wheels (the other three wheels) (for example, ground contact force lower than or equal to about 80% of the ground contact forces on the other wheels) and a dispersion of the ground contact forces on those other wheels falls within a prescribed value (S35).

By executing the determining process in this S35, it is possible to determine whether there is one wheel that is likely to slip among all the wheels 2 (2FL to 2RR) during acceleration, based on a comparison among the states of the respective wheels 2 (specifically, the ground contact forces on the respective wheels 2). Note that the process of S35 corresponds to the determining means of the invention.

When the result of determination by the process of S35 shows that there is one wheel that shows a ground contact force lower than or equal to a prescribed value below the average of the ground contact forces on the other wheels and a dispersion of the ground contact forces on those other wheels falls within a prescribed value (S35: Yes), it is determined that there is one wheel that is likely to slip among all the wheels 2 (2FL to 2RR), a negative camber of a prescribed angle (for example, 5°) is set for that wheel (wheel that is likely to slip) (S16), and then this slip prevention process is terminated.

On the other hand, when the result of determination by the process of S35 shows that there is not a wheel that shows a ground contact force lower than or equal to the prescribed value below the average of the ground contact forces on the other wheels or a dispersion of the ground contact forces on the compared other wheels exceeds the prescribed value (S35: No), the process proceeds to the process of S37.

In the process of S37, it is determined whether there is a difference larger than or equal to a prescribed value between the average of the ground contact forces on the left wheels 2FL and 2RL and the average of the ground contact forces on the right wheels 2FR and 2RR (for example, the ground contact forces on the wheels on one side are higher than or equal to 120% of the ground contact forces on the wheels on the other side) and a dispersion of the ground contact forces on the left wheels 2FL and 2RL and a dispersion of the ground contact forces on the right wheels 2FR and 2RR each fall within a prescribed value (S37).

By executing the determining process of this S37, it is possible to determine whether there is a wheel that is likely to slip among all the wheels 2 (2FL to 2RR) during acceleration, based on a comparison among the states of the respective wheels 2, more specifically, to determine whether either the left wheels 2FL and 2RL or the right wheels 2FR and 2RR are likely to slip during acceleration. Note that the process of S37 corresponds to the determining means of the invention.

When the result of determination by the process of S37 shows that there is a difference larger than or equal to the prescribed value between the average of the ground contact forces on the left wheels 2FL and 2RL and the average of the ground contact forces on the right wheels 2FR and 2RR and a dispersion of the ground contact forces on the left wheels 2FL and 2RL and a dispersion of the ground contact forces on the right wheels 2FR and 2RR each fall within the prescribed value (S37: Yes), it is determined that either the left wheels 2FL and 2RL or the right wheels 2FR and 2RR are likely to slip, a negative camber of a prescribed angle (for example, 5°) is set for the low-ground contact force wheels (the left wheels 2FL and 2RL or the right wheels 2FR and 2RR) that are likely to slip (S38), and then this slip prevention process is terminated. Note that the process of S38 corresponds to the camber angle adjusting means of the invention.

On the other hand, when the result of determination by the process of S37 shows that there is not a difference larger than or equal to the prescribed value between the average of the ground contact forces on the left wheels 2FL and 2RL and the average of the ground contact forces on the right wheels 2FR and 2RR or at least one of a dispersion of the ground contact forces on the left wheels 2FL and 2RL and a dispersion of the ground contact forces on the right wheels 2FR and 2RR is a dispersion exceeding the prescribed value (S37: No), it is determined that neither the left wheels 2FL and 2RL nor the right wheels 2FR and 2RR are likely to slip, and this slip prevention process is terminated without adjusting the camber angles of the wheels 2.

In addition, when the result of determination by the process of S14 shows that the accelerator opening degree is lower than the prescribed value (S14: No), it is determined whether the brake depression amount acquired by the process of S13 is larger than or equal to the prescribed value (S19). When the brake depression amount is smaller than the prescribed value (S19: No), this slip prevention process is terminated.

On the other hand, when the result of determination by the process of S19 shows that the brake depression amount is larger than or equal to the prescribed value (S19: Yes), it is determined whether there is one wheel (one of the wheels 2FL to 2RR) that shows a ground contact force larger than or equal to a prescribed value above the average of the ground contact forces on the other wheels (the other three wheels) (for example, ground contact force higher than or equal to about 120% of the average of the ground contact forces on the other wheels) and a dispersion of the ground contact forces on those other wheels falls within a prescribed value (S40).

By executing the determining process of this S40, it is possible to determine whether there is one wheel that is likely to slip among all the wheels 2 (2FL to 2RR) during deceleration, based on a comparison among the states of the respective wheels 2 (specifically, the ground contact forces on the respective wheels 2). Note that the process of S40 corresponds to the determining means of the invention.

When the result of determination by the process of S40 shows that there is one wheel that shows a ground contact force higher than or equal to a prescribed value above the average of the ground contact forces on the other wheels and a dispersion of the ground contact forces on those other wheels falls within a prescribed value (S40: Yes), it is determined that there is one wheel that is likely to slip among all the wheels 2 (2FL to 2RR), a negative camber of a prescribed angle (for example, 5°) is set for that wheel (wheel that is likely to slip) (S21), and then this slip prevention process is terminated.

On the other hand, when the result of determination by the process of S40 shows that there is not a wheel that shows a ground contact force higher than or equal to the prescribed value above the average of the ground contact forces on the other wheels or a dispersion of the ground contact forces on the compared other wheels exceeds the prescribed value (S40: No), the process proceeds to the process of S42.

In the process of S42, it is determined whether there is a difference larger than or equal to a prescribed value between the average of the ground contact forces on the left wheels 2FL and 2RL and the average of the ground contact forces on the right wheels 2FR and 2RR and a dispersion of the ground contact forces on the left wheels 2FL and 2RL and a dispersion of the ground contact forces on the right wheels 2FR and 2RR each fall within a prescribed value (S42).

By executing the determining process of this S42, it is possible to determine whether there is a wheel that is likely to slip among all the wheels 2 (2FL to 2RR) during deceleration, based on a comparison among the states of the respective wheels 2, more specifically, to determine whether either the left wheels 2FL and 2RL or the right wheels 2FR and 2RR are likely to slip during deceleration. Note that the process of S42 corresponds to the determining means of the invention.

When the result of determination by the process of S42 shows that there is a difference larger than or equal to the prescribed value between the average of the ground contact forces on the left wheels 2FL and 2RL and the average of the ground contact forces on the right wheels 2FR and 2RR and a dispersion of the ground contact forces on the left wheels 2FL and 2RL and a dispersion of the ground contact forces on the right wheels 2FR and 2RR each fall within the prescribed value (S42: Yes), it is determined that either the left wheels 2FL and 2RL or the right wheels 2FR and 2RR are likely to slip, a negative camber of a prescribed angle (for example, 5°) is set for the low-ground contact force wheels (the left wheels 2FL and 2RL or the right wheels 2FR and 2RR) that are likely to slip (S43), and then this slip prevention process is terminated. Note that the process of S43 corresponds to the camber angle adjusting means of the invention.

On the other hand, when the result of determination by the process of S42 shows that there is not a difference larger than or equal to the prescribed value between the average of the ground contact forces on the left wheels 2FL and 2RL and the average of the ground contact forces on the right wheels 2FR and 2RR or at least one of a dispersion of the ground contact forces on the left wheels 2FL and 2RL and a dispersion of the ground contact forces on the right wheels 2FR and 2RR is a dispersion exceeding the prescribed value (S42: No), it is determined that neither the left wheels 2FL and 2RL nor the right wheels 2FR and 2RR are likely to slip, and this slip prevention process is terminated without adjusting the camber angles of the wheels 2.

As described above, with the slip prevention process in the third embodiment, when it is determined that there is a wheel that is likely to slip among all the wheels 2 during travelling (during acceleration or during deceleration) in the determination process of S35, S37, S40 or S42, a negative camber (that is a camber angle in a minus direction) of a prescribed angle is set for the wheel that is likely to slip.

As described above, according to this third embodiment, it is determined whether there is a wheel that is likely to slip among all the wheels 2 (four wheels of 2FL to 2RR), based on a comparison among the states of (ground contact forces on) the respective wheels 2 during travelling, that is, relative states of the wheels during travelling, so that, as in the case of the first embodiment, it is possible to perform predictive control that is highly reliable for slip prevention.

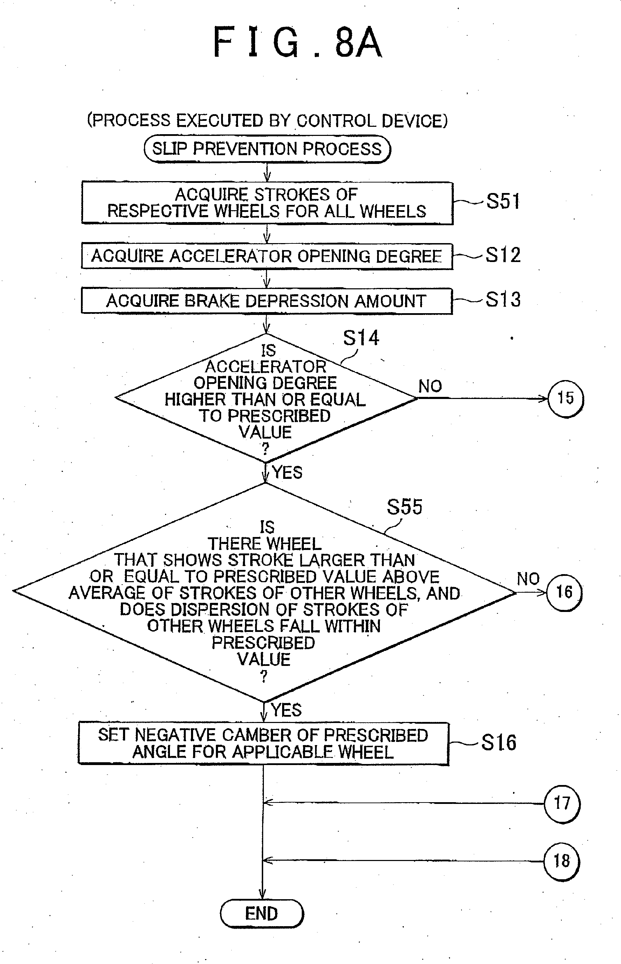

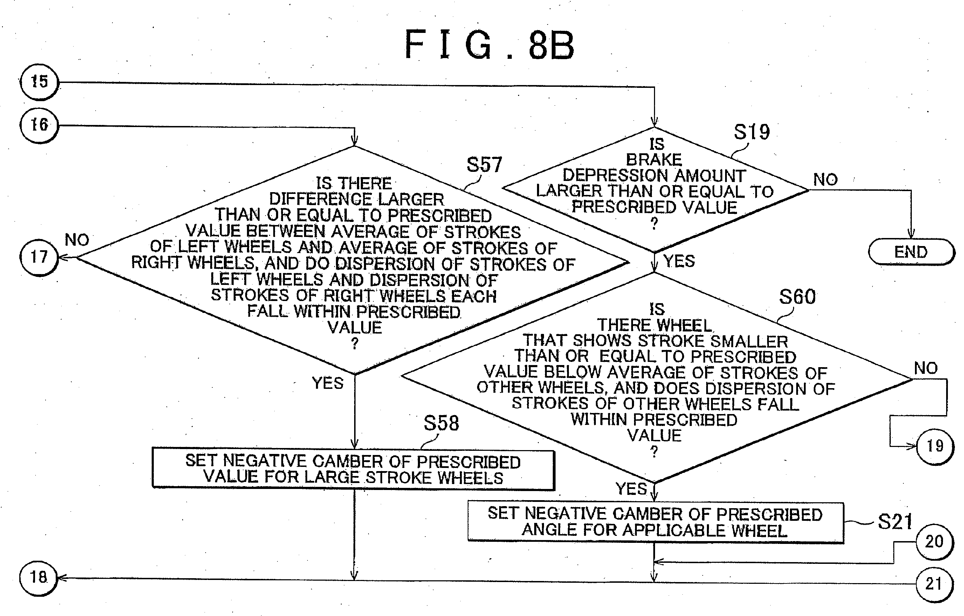

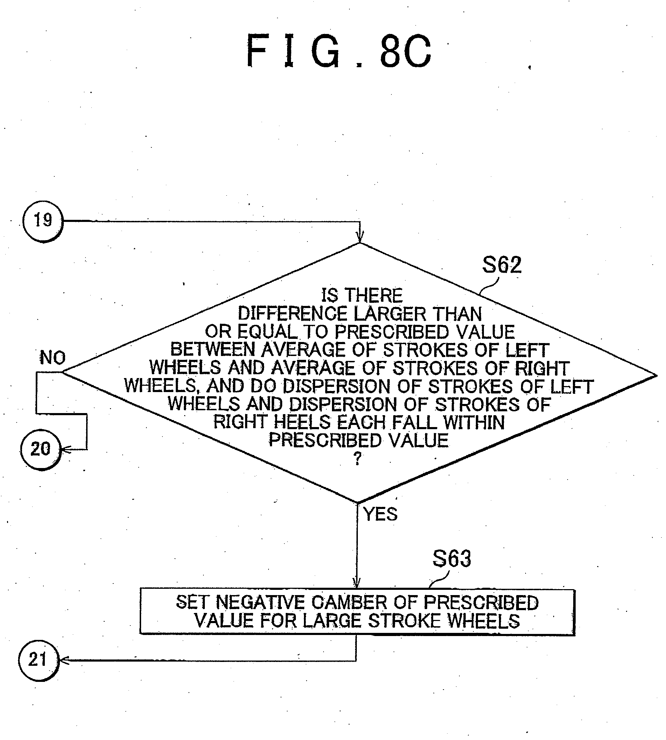

Next, a fourth embodiment will be described with reference to FIG. 8. The above described first embodiment is configured to use the rotational speeds of the respective wheels 2 as the states of the respective wheels 2 for determining a wheel that is likely to slip, whereas, in this fourth embodiment, the strokes (suspension strokes) of the respective wheels 2 are used as the states of the respective wheels 2 for determining a wheel that is likely to slip.

Thus, in this fourth embodiment, the stroke sensor devices 83 instead of the wheel speed sensor devices 81 function as the wheel state detecting means. Note that like reference numerals are assigned to the same portions as those of the above described first embodiment and the description thereof is omitted.

FIG. 8 is a flowchart that shows a slip prevention process in the fourth embodiment. As in the case of the slip prevention process in the first embodiment, the slip prevention process in this fourth embodiment is also repeatedly executed (for example, at intervals of 0.2 ms) by the CPU 71 while the power of the control device 100 is turned on.

As shown in FIG. 8, in the slip prevention process in this fourth embodiment, first, for all the wheels 2, the strokes of the respective wheels 2FL to 2RR are acquired (S51). Specifically, in S51, the strokes of the respective wheels 2FL to 2RR are acquired based on the output values from the stroke sensor devices 83 that serve as the wheel state detecting means of the invention.

After the process of S51, the accelerator opening degree is acquired (S12), the brake depression amount is acquired (S13), and then it is determined whether the accelerator opening degree acquired in the process of S12 is higher than or equal to a prescribed value (S14).

When the result of determination by the process of S14 shows that the accelerator opening degree is higher than or equal to the prescribed value (S14: Yes), it is determined whether there is one wheel (one of the wheels 2FL to 2RR) that shows a stroke larger than or equal to a prescribed value above the average of the strokes of the other wheels (the other three wheels) (for example, stroke larger than or equal to about 120% of the strokes of the other wheels) and a dispersion of the strokes of those other wheels falls within a prescribed value (S55).

By executing the determining process of this S55, it is possible to determine whether there is one wheel that is likely to slip among all the wheels 2 (2FL to 2RR) during acceleration, based on a comparison among the states of the respective wheels 2 (specifically, the strokes of the respective wheels 2). Note that the process of S55 corresponds to the determining means of the invention.

When the result of determination by the process of S55 shows that there is one wheel that shows a stroke larger than or equal to the prescribed value above the average of the strokes of the other wheels and a dispersion of the strokes of those other wheels falls within the prescribed value (S55: Yes), it is determined that there is one wheel that is likely to slip among all the wheels 2 (2FL to 2RR), a negative camber of a prescribed angle (for example, 5°) is set for that wheel (wheel that is likely to slip) (S16), and then this slip prevention process is terminated.

On the other hand, when the result of determination by the process of S55 shows that there is not a wheel that shows a stroke larger than or equal to the prescribed value above the average of the strokes of the other wheels or a dispersion of the strokes of the compared other wheels exceeds the prescribed value (S55: No), the process proceeds to the process of S57.

In the process of S57, it is determined whether there is a difference larger than or equal to a prescribed value between the average of the strokes of the left wheels 2FL and 2RL and the average of the strokes of the right wheels 2FR and 2RR (for example, the strokes of the wheels on one side are larger than or equal to 120% of the strokes of the wheels on the other side) and a dispersion of the strokes of the left wheels 2FL and 2RL and a dispersion of the strokes of the right wheels 2FR and 2RR each fall within a prescribed value (S57).

By executing the determining process of this S57, it is possible to determine whether there is a wheel that is likely to slip among all the wheels 2 (2FL to 2RR) during acceleration, based on a comparison among the states of the respective wheels 2, more specifically, to determine whether either the left wheels 2FL and 2RL or the right wheels 2FR and 2RR are likely to slip during acceleration. Note that the process of S57 corresponds to the determining means of the invention.

When the result of determination by the process of S57 shows that there is a difference larger than or equal to the prescribed value between the average of the strokes of the left wheels 2FL and 2RL and the average of the strokes of the right wheels 2FR and 2RR and a dispersion of the strokes of the left wheels 2FL and 2RL and a dispersion of the strokes of the right wheels 2FR and 2RR each fall within the prescribed value (S57: Yes), it is determined that either the left wheels 2FL and 2RL or the right wheels 2FR and 2RR are likely to slip, a negative camber of a prescribed angle (for example, 5°) is set for the large-stroke wheels (the left wheels 2FL and 2RL or the right wheels 2FR and 2RR) that are likely to slip (S58), and then this slip prevention process is terminated. Note that the process of S58 corresponds to the camber angle adjusting means of the invention.

On the other hand, when the result of determination by the process of S57 shows that there is not a difference larger than or equal to the prescribed value between the average of the strokes of the left wheels 2FL and 2RL and the average of the strokes of the right wheels 2FR and 2RR or at least one of a dispersion of the strokes of the left wheels 2FL and 2RL and a dispersion of the strokes of the right wheels 2FR and 2RR is a dispersion exceeding the prescribed value (S57: No), it is determined that neither the left wheels 2FL and 2RL nor the right wheels 2FR and 2RR are likely to slip, and this slip prevention process is terminated without adjusting the camber angles of the wheels 2.

In addition, when the result of determination by the process of S14 shows that the accelerator opening degree is lower than the prescribed value (S14: No), it is determined whether the brake depression amount acquired by the process of S13 is larger than or equal to the prescribed value (S19). When the brake depression amount is smaller than the prescribed value (S19: No), this slip prevention process is terminated.

On the other hand, when the result of determination by the process of S19 shows that the brake depression amount is larger than or equal to the prescribed value (S19: Yes), it is determined whether there is one wheel (one of the wheels 2FL to 2RR) that shows a stroke smaller than or equal to a prescribed value below the average of the strokes of the other wheels (the other three wheels) (for example, stroke smaller than or equal to about 80% of the average of the strokes of the other wheels) and a dispersion of the strokes of those other wheels falls within a prescribed value (S60).

By executing the determining process of this S60, it is possible to determine whether there is one wheel that is likely to slip among all the wheels 2 (2FL to 2RR) during deceleration, based on a comparison among the states of the respective wheels 2 (specifically, the strokes of the respective wheels 2). Note that the process of S60 corresponds to the determining means of the invention.

When the result of determination by the process of S60 shows that there is one wheel that shows a stroke smaller than or equal to the prescribed value below the average of the strokes of the other wheels and a dispersion of the strokes of those other wheels falls within the prescribed value (S60: Yes), it is determined that there is one wheel that is likely to slip among all the wheels 2 (2FL to 2RR), a negative camber of a prescribed angle (for example, 5°) is set for that wheel (wheel that is likely to slip) (S21), and then this slip prevention process is terminated.

On the other hand, when the result of determination by the process of S60 shows that there is not a wheel that shows a stroke smaller than or equal to the prescribed value below the average of the strokes of the other wheels or a dispersion of the strokes of the compared other wheels exceeds the prescribed value (S60: No), the process proceeds to the process of S62.

In the process of S62, it is determined whether there is a difference larger than or equal to a prescribed value between the average of the strokes of the left wheels 2FL and 2RL and the average of the strokes of the right wheels 2FR and 2RR and a dispersion of the strokes of the left wheels 2FL and 2RL and a dispersion of the strokes of the right wheels 2FR and 2RR each fall within a prescribed value (S62).

By executing the determining process of this S62, it is possible to determine whether there is a wheel that is likely to slip among all the wheels 2 (2FL to 2RR) during deceleration, based on a comparison among the states of the respective wheels 2, more specifically, to determine whether either the left wheels 2FL and 2RL or the right wheels 2FR and 2RR are likely to slip during deceleration. Note that the process of S62 corresponds to the determining means of the invention.

When the result of determination by the process of S62 shows that there is a difference larger than or equal to the prescribed value between the average of the strokes of the left wheels 2FL and 2RL and the average of the strokes of the right wheels 2FR and 2RR and a dispersion of the strokes of the left wheels 2FL and 2RL and a dispersion of the strokes of the right wheels 2FR and 2RR each fall within the prescribed value (S62: Yes), it is determined that either the left wheels 2FL and 2RL or the right wheels 2FR and 2RR are likely to slip, a negative camber of a prescribed angle (for example, 5°) is set for the large-stroke wheels (the left wheels 2FL and 2RL or the right wheels 2FR and 2RR) that are likely to slip (S63), and then this slip prevention process is terminated. Note that the process of S63 corresponds to the camber angle adjusting means of the invention.

On the other hand, when the result of determination by the process of S62 shows that there is not a difference larger than or equal to the prescribed value between the average of the strokes of the left wheels 2FL and 2RL and the average of the strokes of the right wheels 2FR and 2RR or at least one of a dispersion of the strokes of the left wheels 2FL and 2RL and a dispersion of the strokes of the right wheels 2FR and 2RR is a dispersion exceeding the prescribed value (S62: No), it is determined that neither the left wheels 2FL and 2RL nor the right wheels 2FR and 2RR are likely to slip, and this slip prevention process is terminated without adjusting the camber angles of the wheels 2.

As described above, with the slip prevention process in the fourth embodiment, when it is determined that there is a wheel that is likely to slip among all the wheels 2 during travelling (during acceleration or during deceleration) in the determination process of S55, S57, S60 or S62, a negative camber (that is a camber angle in a minus direction) of a prescribed angle is set for the wheel that is likely to slip.

As described above, according to this fourth embodiment, it is determined whether there is a wheel that is likely to slip among all the wheels 2 (four wheels of 2FL to 2RR), based on a comparison among the states (strokes) of the respective wheels 2 during travelling, that is, relative states of the wheels during travelling, so that, as in the case of the first embodiment, it is possible to perform predictive control that is highly reliable for slip prevention.

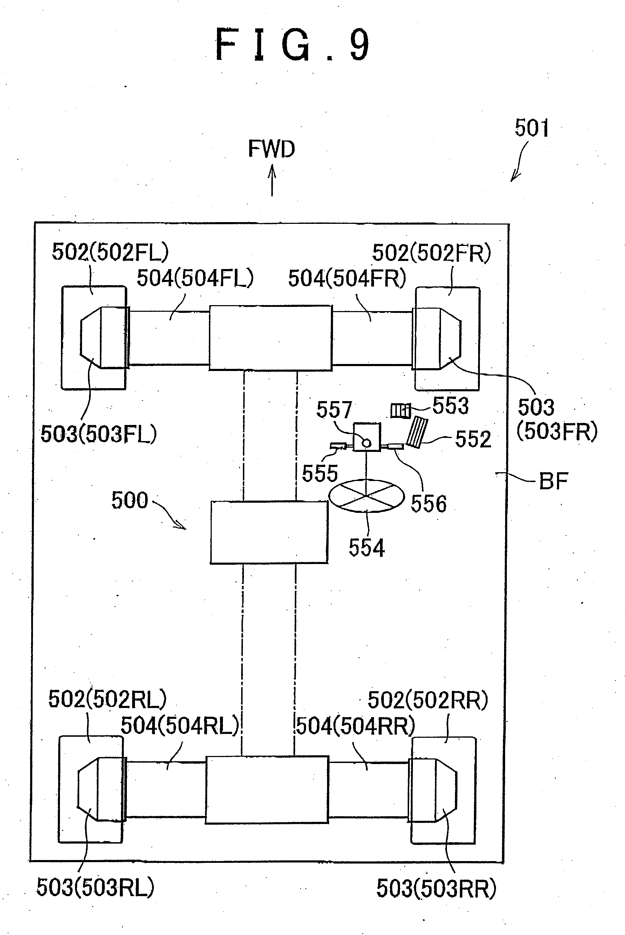

Subsequently, a fifth embodiment will be described with reference to the accompanying drawings. FIG. 9 is a schematic view that schematically shows a vehicle 501 equipped with a vehicle control device 5100 in the fifth embodiment of the invention. Note that the arrow FWD in FIG. 9 indicates the forward direction of the vehicle 501.

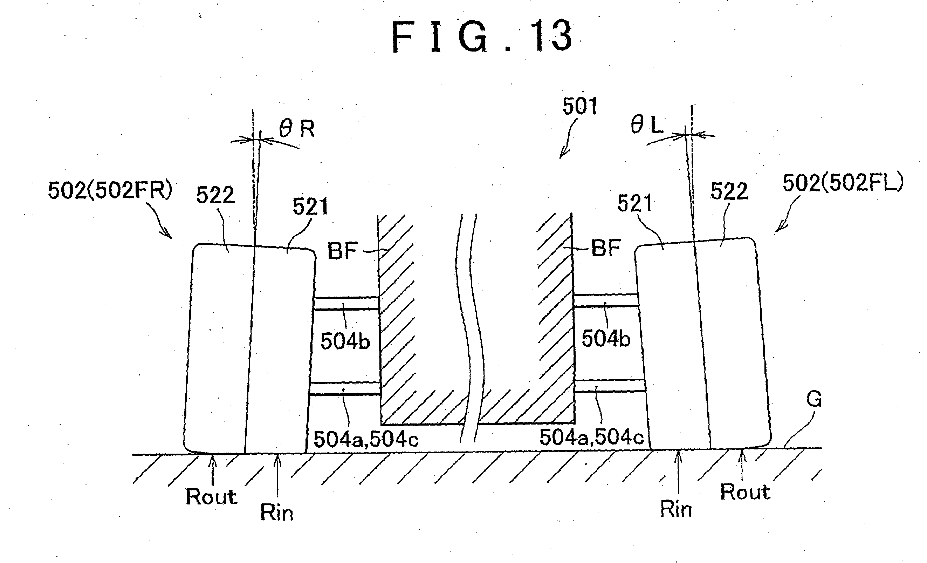

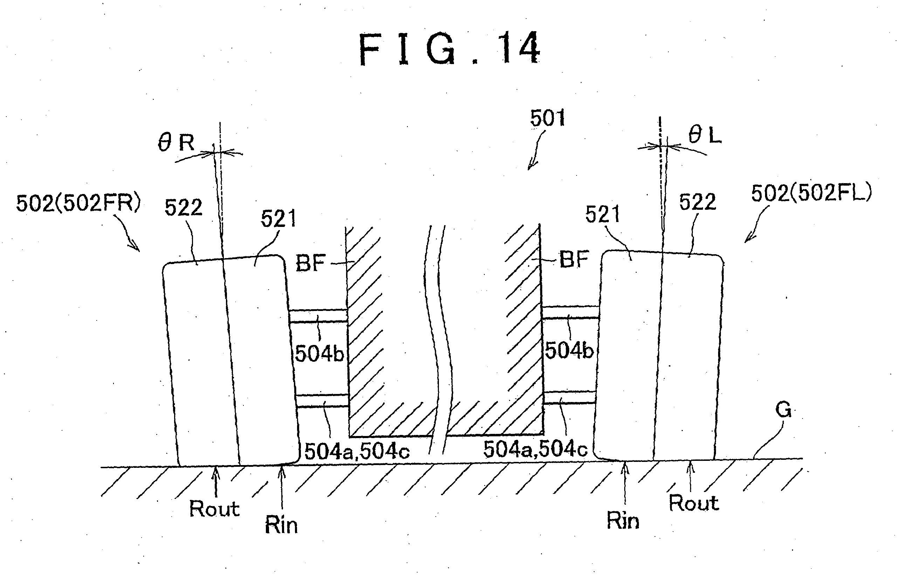

First, a schematic configuration of the vehicle 501 will be described. As shown in FIG. 9, the vehicle 501 mainly includes a vehicle body frame BF, a plurality of (four in the present embodiment) wheels 502 supported by the vehicle body frame BF, wheel driving devices 503 that independently drive those wheels 502 for rotation, and camber angle adjusting devices 504 that, for example, adjust the camber angles of the respective wheels 502, and the vehicle 501 is configured to be able to improve running performance and achieve fuel saving by controlling the camber angles of the wheels 502 by the vehicle control device 5100 to use two types of treads provided for each wheel 502 (see FIG. 13 and FIG. 14).

Subsequently, a detailed configuration of components will be described. As shown in FIG. 9, the wheels 502 include four wheels, that is, left and right front wheels 502FL and 502FR that are located at the front side in the travelling direction of the vehicle 501 and left and right rear wheels 502RL and 502RR that are located at the rear side in the travelling direction, and these front and rear wheels 502FL to 502RR are configured to be independently rotatable by rotational driving force applied from the wheel driving devices 503.

The wheel driving devices 503 are rotary driving devices for independently driving the wheels 502 for rotation, and are configured so that four electric actuators (FL to RR actuators 503FL to 503RR) are arranged at the respective wheels 502 (that is, as in-wheel motors) as shown in FIG. 9. When the driver operates an accelerator pedal 552, rotational driving force is applied to the wheels 502 from the respective wheel driving devices 503, and the wheels 502 are rotated at a rotational speed corresponding to the operation amount of the accelerator pedal 552.

In addition, the wheels 502 (front and rear wheels 502FL to 502RR) are configured so that the camber angles are adjustable by the camber angle adjusting devices 504. The camber angle adjusting devices 504 are driving devices for adjusting the camber angles of the respective wheels 502, and four in total (FL to RR actuators 504FL to 504RR) are arranged at positions corresponding to the respective wheels 502 as shown in FIG. 9.

In addition, the camber angle adjusting devices 504 are controlled for operation by the vehicle control device 5100 based on a change of condition, such as a travelling condition of the vehicle 501 (for example, during travelling at a constant speed or during acceleration or deceleration, or during travelling straight ahead or during turning), a condition of a road surface G (for example, a dry road surface and a wet road surface) on which the wheels 502 run, and the like, and adjust the camber angles of the wheels 502.

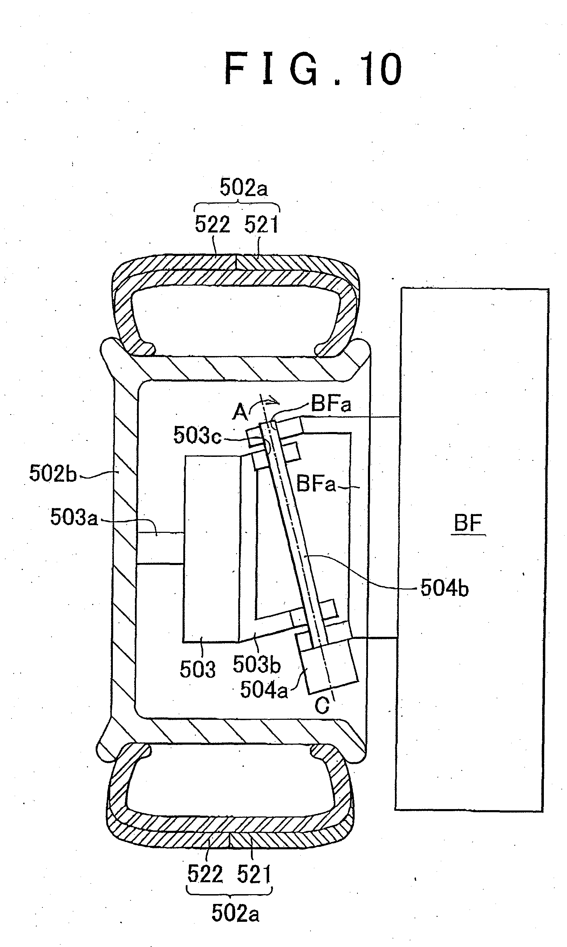

Here, a detailed configuration of the wheel driving devices 503 and camber angle adjusting devices 504 will be described with reference to FIG. 10 by taking the front left wheel 502FL as an example. FIG. 10 is a cross-sectional view of the wheel 502, taken along the camber axis. Note that, in FIG. 10, a power supply wire, or the like, for supplying a drive voltage to the wheel driving device 503 is omitted from the drawing.

As shown in FIG. 10, each of the wheels 502 (front and rear wheels 502FL to 502RR) is configured to mainly include a tire 502a made of a rubber elastic material and a wheel 502b made of aluminum alloy, or the like, and each of the wheel driving devices 503 (FL to RR motors 503FL to 503RR) is arranged at the inner peripheral portion of the wheel 502b as an in-wheel motor.

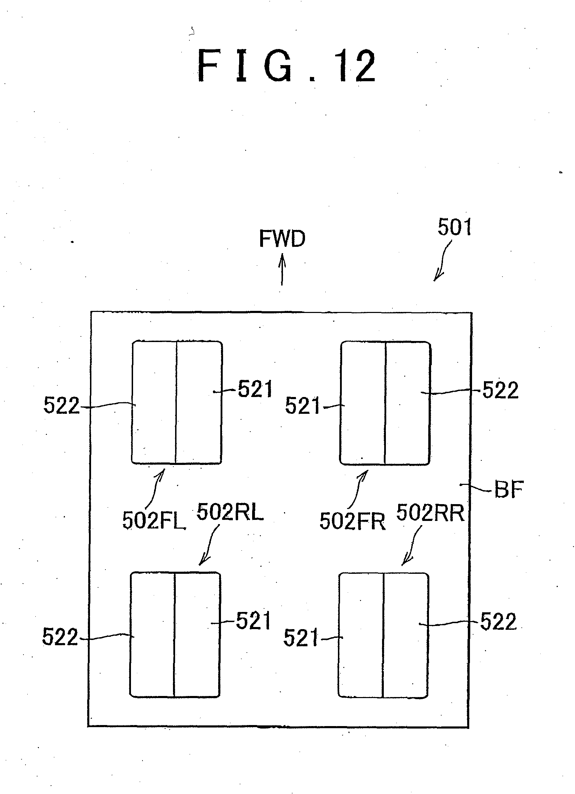

The tire 502a has a first tread 521 that is arranged at an inner side (right side in FIG. 10) of the vehicle 501 and a second tread 522 that is different in characteristics from the first tread 521 and that is arranged at an outer side (left side in FIG. 10) of the vehicle 501. Note that a detailed configuration of the wheel 502 (tire 502a) will be described later with reference to FIG. 12.

As shown in FIG. 10, the wheel driving device 503 has a wheel drive shaft 503a that protrudes toward the front surface (left side in FIG. 10) and that is fixedly coupled to the wheel 502b, and is configured to be able to transmit rotational driving force to the wheel 502 via the wheel drive shaft 503a.

Each camber angle adjusting device 504 includes a drive actuator 504a and a camber drive shaft 504b, and the drive actuator 504a is fixed to the vehicle body frame BF and drives the camber drive shaft 504b for rotation. The camber drive shaft 504b is inserted in a hole 503c of a bracket 503b of each wheel driving device 503 (FL to RR motor 503FL to 503RR) and is fixedly coupled. In addition, the camber drive shaft 504b is rotatably inserted via a bearing, or the like, in a hole portion BFb of a vehicle body side bracket BFa fixed to the vehicle body frame BF. Note that the camber drive shaft 504b is arranged to be inclined so that the front is oriented to an outer side with respect to the longitudinal direction of the vehicle 501.

By so doing, by driving the drive actuator 504a for rotation, the wheel driving device 503 is oscillated about the camber drive shaft 504b, which serves as the camber axis C, as the center of oscillation, and, as a result, a predetermined camber angle is set for each wheel 502.

For example, as the drive actuator 504a is driven for rotation in an arrow A direction in a state where the wheel 502 is placed at a neutral position (in a state where the vehicle 501 is travelling straight ahead), the camber drive shaft 504b is rotated, the wheel driving device 503 is rotated about the camber axis C and then a camber angle in a minus direction (negative camber) is set for the wheel 502. On the other hand, as the drive actuator 504a is driven for rotation in a direction opposite to the above, a camber angle in a plus direction (positive camber) is set for the wheel 502.

Referring back to FIG. 9, the description will continued. The accelerator pedal 552 and a brake pedal 553 are operating members operated by the driver, and the travelling speed and braking force of the vehicle 501 are determined based on the depressed states (depression amounts, depression speeds, and the like) of the respective pedals 552 and 553, and then the operation of the wheel driving devices 503 is controlled.

A steering mechanism 554 is an operating member operated by the driver, and the turning radius, or the like, of the vehicle 501 is determined based on its operated state (rotation angle, rotation speed, and the like), and then the operation of the camber angle adjusting devices 504 is controlled. A wiper switch 555 is an operating member operated by the driver, and the operation of a wiper (not shown) is controlled based on its operated state (operated position, and the like).

Similarly, a turn-signal switch 556 and a high grip switch 557 are operating members operated by the driver, and the operation of a turn signal (not shown) is controlled in the case of the former case and the operation of the camber angle adjusting devices 504 is controlled in the latter case based on their operated states (operated positions, and the like).

Note that a state where the high grip switch 557 is turned on corresponds to a state where a high grip characteristic is selected as the characteristic of the wheels 502, and a state where the high grip switch 557 is turned off corresponds to a state where a low rolling resistance is selected as the characteristic of the wheels 502.

The vehicle control device 5100 is a vehicle control device for controlling components of the above configured vehicle 501, and, for example, detects the operated states of the respective pedals 552 and 553 and operates the wheel driving devices 503 based on the detection results to thereby control the rotational speeds of the respective wheels 502.

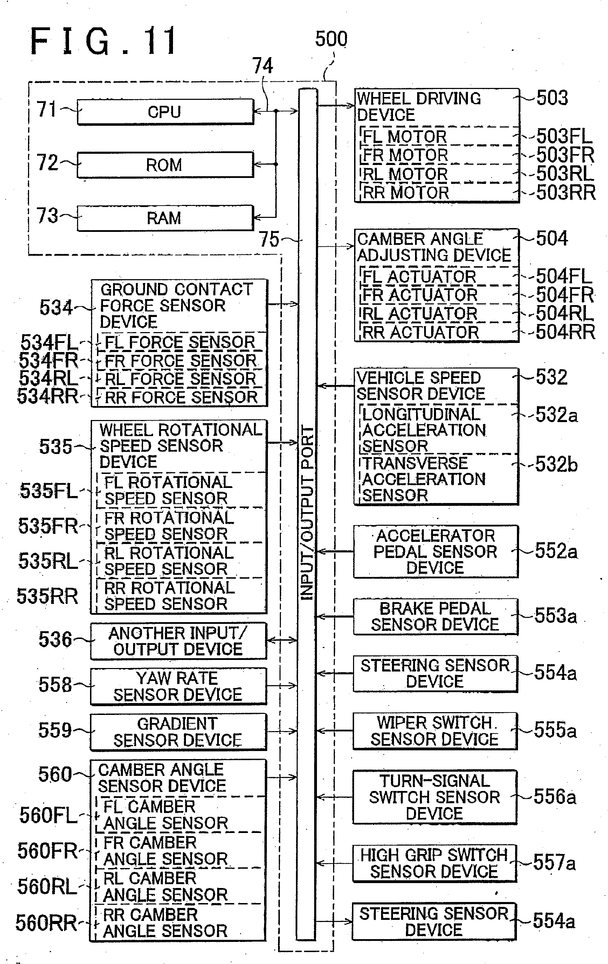

Alternatively, the operated states of the accelerator pedal 552, brake pedal 553 and steering mechanism 554 are detected, and the camber angle adjusting devices 504 are operated based on the detection results to adjust the camber angles of the respective wheels to thereby use two types of treads 521 and 522 provided for each wheel 502 (see FIG. 13 and FIG. 14), thus improving running performance and achieving fuel saving. Here, a detailed configuration of the vehicle control device 5100 will be described with reference to FIG. 11.

FIG. 11 is a block diagram that shows an electrical configuration of the vehicle control device 5100. As shown in FIG. 11, the vehicle control device 5100 includes a CPU 71 that serves as control means, determining means and calculating means, a ROM 72 and a RAM 73, and these are connected to an input/output port 75 via a bus line 74. In addition, a plurality of devices, such as the wheel driving devices 503, are connected to the input/output port 75.

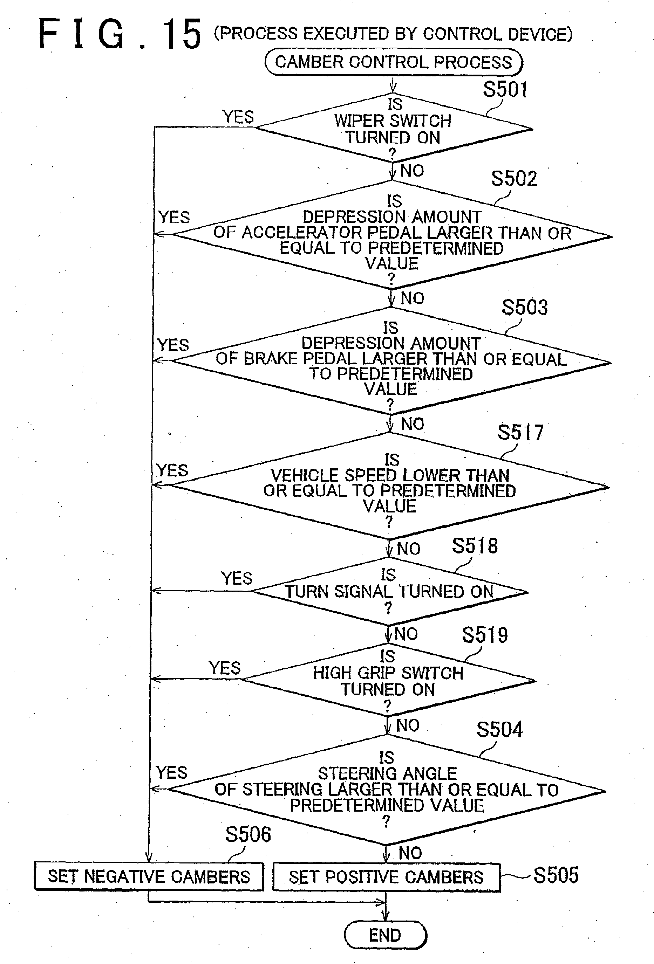

The CPU 71 is a processor that controls the components connected by the bus line 74. The ROM 72 is a non-rewritable nonvolatile memory that stores control programs executed by the CPU 71, fixed value data, and the like. The RAM 73 is a memory for rewritably storing various pieces of data during execution of the control programs. Note that the flowchart (camber control process) shown in FIG. 15 is stored in the ROM 72.

As described above, the wheel driving devices 503 are devices for driving the wheels 502 (see FIG. 9) for rotation, and mainly include four FL to RR motors 503FL to 503RR that apply rotational driving force to the respective wheels 502 and a driving circuit (not shown) that controls driving of those motors 503FL to 503RR based on a command from the CPU 71.

As described above, the camber angle adjusting devices 504 are devices for adjusting the camber angles of the respective wheels 502, and mainly include four FL to RR drive actuators 504FL to 504RR that apply driving force for angle adjustment to the respective wheels 502 (wheel driving devices 503) and a driving circuit (not shown) that controls driving of those drive actuators 504FL to 504RR based on a command from the CPU 71.

As the driving circuit of the camber angle adjusting devices 504 controls driving of the drive actuators 504a based on a command from the CPU 71, the camber drive shafts 504b are driven for rotation. The driving circuit of the camber angle adjusting devices 504 monitors the rotation angle of each drive actuator 504a by a rotation angle sensor, and stops rotation driving of the drive actuator 504a that has reached a target value (extension/retraction amount) instructed from the CPU 71. Note that the results of detection by the rotation angle sensors are output from the driving circuit to the CPU 71, and the CPU 71 is able to obtain the current camber angles of the respective wheels 502 based on the detection results.

Vehicle speed sensor devices 532 are devices for detecting the ground speed (absolute value and travelling direction) of the vehicle 501 with respect to a road surface G and for outputting the detection results to the CPU 71, and mainly include longitudinal and transverse acceleration sensors 532a and 532b and a control circuit (not shown) that processes the results of detection by those acceleration sensors 532a and 532b and outputs the processed results to the CPU 71.

The longitudinal acceleration sensor 532a is a sensor that detects the acceleration of the vehicle 501 (vehicle body frame BF) in the longitudinal direction (vertical direction in FIG. 9), and the transverse acceleration sensor 532b is a sensor that detects the acceleration of the vehicle 501 (vehicle body frame BF) in the transverse direction (horizontal direction in FIG. 9). Note that, in the present embodiment, these acceleration sensors 532a and 532b are configured as piezoelectric sensors that utilize piezoelectric elements.

The CPU 71 calculates the time integrals of the results (acceleration values) of detection by the acceleration sensors 532a and 532b that are input from the control circuit of the vehicle speed sensor devices 532 to calculate respective speeds in two directions (longitudinal and transverse directions), and then combines those two directional components, so that it is possible to obtain the ground speed (absolute value and travelling direction) of the vehicle 501.

Ground contact force sensor devices 534 are devices for detecting forces that the ground contact surfaces of the respective wheels 502 receive from the road surface G and for outputting the detection results to the CPU 71, and include FL to RR force sensors 534FL to 534RR that respectively detect forces received by the respective wheels 502 and a processing circuit (not shown) that processes the results of detection by those force sensors 534FL to 534RR and outputs the processed results to the CPU 71.

Note that, in the present embodiment, the force sensors 534FL to 534RR are configured as piezoresistance-type triaxial force sensors. These force sensors 534FL to 534RR are arranged on suspension shafts (not shown) of the respective wheels 502, and detect forces received by the above described wheels 502 from the road surface G in three directions of the longitudinal direction, transverse direction and vertical direction of the vehicle 501.

Based on the results (ground contact forces) of detection by the force sensors 534FL to 534RR that are input from the ground contact force sensor devices 534, the CPU 71 estimates the frictional coefficient $\mu$ of the road surface G on the ground contact surfaces of the respective wheels 502 as follows.

For example, focusing on the front wheel 502FL, where the forces in the longitudinal, transverse and vertical directions of the vehicle 501, detected by the FL force sensor 534FL, are respectively Fx, Fy and Fz, the frictional coefficient $\mu$ of the road surface G of a portion corresponding to the ground contact surface of the front wheel 502FL in the longitudinal direction of the vehicle 501 is Fx/Fz ($\mu$x = Fx/Fz) in a slip state where the front wheel 502FL is slipping on the road surface G, and is estimated to be a value larger than Fx/Fz ($\mu$x > Fx/Fz) in a non-slip state where the front wheel 502FL is not slipping on the road surface G.

Note that the same applies to the frictional coefficient $\mu$y in the transverse direction of the vehicle 501; $\mu$y = Fy/Fz holds in a slip state, and the frictional coefficient $\mu$y is estimated to be a value larger than Fy/Fz in a non-slip state. In addition, the frictional coefficient $\mu$ may be, of course, detected by another method. As another method, for example, known techniques described in Japanese Patent Application Publication No. 2001-315633 and Japanese Patent Application Publication No. 2003-118554 are exemplified.

Wheel rotational speed sensor devices 535 are devices for detecting the rotational speeds of the respective wheels 502 and for outputting the detection results to the CPU 71, and include four FL to RR rotational speed sensors 535FL to 535RR that respectively detect the rotational speeds of the respective wheels 502 and a processing circuit (not shown) that processes the results of detection by those rotational speed sensors 535FL to 535RR and outputs the processed results to the CPU 71.

Note that, in the present embodiment, the rotation sensors 535FL to 535RR are provided for the respective wheels 502, and detect the angular speeds of the respective wheels 502 as rotational speeds. That is, the rotation sensors 535FL to 535RR each are configured as an electromagnetic pickup sensor that includes a rotary body that rotates in synchronization with the wheel 502 and a pickup that electromagnetically detects the presence or absence of a tooth that is formed in the circumferential direction of the rotary body in multiple numbers.

The CPU 71 is able to obtain the actual circumferential speeds of the respective wheels 502 based on the rotational speeds of the respective wheels 502, input from the wheel rotational speed sensor devices 535, and the outside diameters of the respective wheels 502, stored in the ROM 72 in advance, and is able to determine whether each wheel 502 is slipping by comparing the circumferential speed with the travelling speed (ground speed) of the vehicle 501.

An accelerator pedal sensor device 552a is a device for detecting the operated state of the accelerator pedal 552 and for outputting the detection results to the CPU 71, and mainly includes an angle sensor (not shown) that detects the depressed state of the accelerator pedal 552 and a control circuit (not shown) that processes the results of detection by the angle sensor and outputs the processed results to the CPU 71.

A brake pedal sensor device 553a is a device for detecting the operated state of the brake pedal 553 and for outputting the detection results to the CPU 71, and mainly includes an angle sensor (not shown) that detects the depressed state of the brake pedal 553 and a control circuit (not shown) that processes the results of detection by the angle sensor and outputs the processed results to the CPU 71.

A steering sensor device 554a is a device for detecting the operated state of the steering mechanism 554 and for outputting the detection results to the CPU 71, and mainly includes an angle sensor (not shown) that detects the operated state of the steering mechanism 554 and a control circuit (not shown) that processes the results of detection by the angle sensor and outputs the processed results to the CPU 71.

A wiper switch sensor device 555a is a device for detecting the operated state of the wiper switch 555 and for outputting the detection results to the CPU 71, and mainly includes a positioning sensor (not shown) that detects the operated state (operated position) of the wiper switch 555 and a control circuit (not shown) that processes the results of detection by the positioning sensor and outputs the processed results to the CPU 71.

A turn-signal switch sensor device 556a is a device for detecting the operated state of the turn-signal switch 556 and for outputting the detection results to the CPU 71, and mainly includes a positioning sensor (not shown) that detects the operated state (operated position) of the turn-signal switch 556 and a control circuit (not shown) that processes the results of detection by the positioning sensor and outputs the processed results to the CPU 71.

A high grip switch sensor device 557a is a device for detecting the operated state of the high grip switch 557 and for outputting the detection results to the CPU 71, and mainly includes a positioning sensor (not shown) that detects the operated state (operated position) of the high grip switch 557 and a control circuit (not shown) that processes the results of detection by the positioning sensor and outputs the processed results to the CPU 71.

A yaw rate sensor device 558 is a device for detecting a yaw rate applied to the vehicle 501 and for outputting the detection results to the CPU 71, and mainly includes a yaw rate sensor (not shown) that detects the yaw rate condition of the vehicle 501 and a control circuit (not shown) that processes the results of detection by the yaw rate sensor and outputs the processed results to the CPU 71.

A gradient sensor device 559 is a device for detecting the gradient of the vehicle 501 and for outputting the detection results to the CPU 71, and mainly includes a gradient sensor (not shown) that detects the gradient condition of the vehicle 501 and a control circuit (not shown) that processes the results of detection by the gradient sensor and outputs the processed results to the CPU 71.

Camber angle sensor devices 560 are devices for detecting the camber angles of the respective wheels 502 and for outputting the detection results to the CPU 71, and include four FL to RR camber angle sensors 560FL to 560RR that respectively detect the camber angles of the respective wheels 502 and a processing circuit (not shown) that processes the results of detection by the camber angle sensors 560FL to 560RR and outputs the processed results to the CPU 71.

Note that, in the present embodiment, each angle sensor is configured as a contact-type potentiometer that uses electrical resistance. The CPU 71 is able to obtain the depression amounts of the respective pedals 552 and 553 and the operation angle of the steering mechanism 554 based on the detection results input from the control circuits of the respective sensor devices 552a to 554a, and is able to obtain the depression speeds (operation speeds) of the respective pedals 552 and 553 and the rotation speed (operation speed) of the steering mechanism 554 by differentiating the detection results with respect to time.

As another input/output device 536 shown in FIG. 11, for example, a rainfall sensor for detecting the amount of rainfall, an optical sensor that detects the state of the road surface G in a non-contact manner, or the like, is exemplified.

Subsequently, a detailed configuration of the wheels 502 will be described with reference to FIG. 12 to FIG. 14. FIG. 12 is a schematic view that schematically shows a top view of the vehicle 501. FIG. 13 and FIG. 14 are schematic views that schematically show front views of the vehicle 501. FIG. 13 shows a state where negative cambers are set for the wheels 502. FIG. 14 shows a state where a positive camber is set for the wheels 502.

As described above, the wheels 502 each have two types of treads, that is, a first tread 521 and a second tread 522, and, as shown in FIG. 12, in each of the wheels 502 (front wheels 502FL and 502FR and rear wheels 502RL and 502RR), the first tread 521 is arranged at an inner side of the vehicle 501, and the second tread 522 is arranged at an outer side of the vehicle 501.

In the present embodiment, the width dimensions (dimensions in the horizontal direction in FIG. 12) of both treads 521 and 522 are equal. In addition, the first tread 521 is configured to have a characteristic of high grip force (high grip characteristic) as compared with the second tread 522. On the other hand, the second tread 522 is configured to have a characteristic of low rolling resistance (low rolling resistance) as compared with the first tread 521.

For example, as shown in FIG. 13, as the operation of the camber angle adjusting devices 504 is controlled and then the camber angles θL and θR of the wheels 502 are adjusted in a minus direction (negative camber), the contact pressures Rin of the first treads 521 arranged at the inner side of the vehicle 501 are increased, and the contact pressures Rout of the second treads 522 arranged at the outer side of the vehicle 501 are reduced. By so doing, by utilizing the high grip characteristic of the first treads 521, it is possible to improve running performance (for example, turning performance, accelerating performance, braking performance or vehicle stability in the event of rain, or the like).

On the other hand, as shown in FIG. 14, as the operation of the cambers adjusting devices 504 is controlled and then the camber angles θL and θR of the wheels 502 are adjusted in a plus direction (positive camber direction), the contact pressures of the first treads 521 arranged at the inner side of the vehicle 501 are reduced, and the contact pressures of the second treads 522 arranged at the outer side of the vehicle 501 are increased. Thus, by utilizing the low rolling resistance of the second treads 522, it is possible to improve fuel saving performance.

Subsequently, the camber control process will be described with reference to FIG. 15. FIG. 15 is a flowchart that shows the camber control process. This process is a process that is repeatedly executed (for example, at intervals of 0.2 ms) by the CPU 71 while the power of the vehicle control device 5100 is turned on, and both performances, that is, the above described running performance and fuel saving performance, are achieved by adjusting the camber angles set for the wheels 502.

The CPU 71, in relation to the camber control process, first, determines whether the wiper switch 555 is turned on, that is, whether a wiping operation by a wiper for a windshield is instructed by the driver (S501). As a result, when it is determined that the wiper switch 555 is turned on (S501: Yes), it is presumed that the current weather is rainy and there is a possibility that a water layer is formed on the road surface G and therefore, negative cambers are set for the wheels 502 (S506), and then this camber control process is terminated.

By so doing, the contact pressures Rin of the first treads 521 are increased and the contact pressures Rout of the second treads 522 are reduced (see FIG. 13), so that it is possible to improve vehicle stability in the event of rain by utilizing the high grip characteristic of the first treads 521.

When it is determined in the process of S501 that the wiper switch 555 is not turned on (S501: No), it is presumed that it is not rainy and the condition of the road surface G is good and therefore, subsequently, it is determined whether the depression amount of the accelerator pedal 552 is larger than or equal to a predetermined amount, that is, whether a predetermined acceleration or above (quick acceleration) is instructed by the driver (S502).

As a result, when it is determined that the depression amount of the accelerator pedal 552 is larger than or equal to the predetermined value (S502: Yes), quick acceleration is instructed by the driver and there is a possibility that the wheels 502 slip and therefore, negative cambers are set for the wheels 502 (S506), and then this camber process is terminated.

By so doing, as well as the above described case, the contact pressures Rin of the first treads 521 are increased and the contact pressures Rout of the second treads 522 are reduced (see FIG. 13), so that it is possible to prevent a slip of the wheels 502 by utilizing the high grip characteristic of the first treads 521, and it is possible to improve the acceleration performance of the vehicle 501.

When it is determined in the process of S502 that the depression amount of the accelerator pedal 552 has not reached the predetermined value (S502: No), it is presumed that quick acceleration is not instructed but it is gentle acceleration or travelling at a constant speed and therefore, subsequently, it is determined whether the depression amount of the brake pedal 553 is larger than or equal to a predetermined value, that is, whether a predetermined brake or above (quick braking) is instructed by the driver (S503).

As a result, when it is determined that the depression amount of the brake pedal 553 is larger than or equal to the predetermined value (S503: Yes), quick braking is instructed by the driver and there is a possibility that the wheels 502 lock and therefore, negative cambers are set for the wheels 502 (S506), and this camber process is terminated.

By so doing, as well as the above described case, the contact pressures Rin of the first treads 521 are increased and the contact pressures Rout of the second treads 522 are reduced (see FIG. 13), so that it is possible to prevent a lock of the wheels 502 by utilizing the high grip characteristic of the first treads 521, and it is possible to improve the braking performance of the vehicle 501.

When it is determined in the process of S503 that the depression amount of the brake pedal 553 has not reached the predetermined value (S503: No), it is presumed that quick braking is not instructed but it is gentle braking, acceleration or travelling at a constant speed and therefore, subsequently, it is determined whether the vehicle speed (ground speed) is lower than or equal to a predetermined value (for example, 15 km per hour), that is, whether it is low speed travelling (S517).

As a result, when it is determined that the vehicle speed is lower than or equal to the predetermined value (that is, during low speed travelling) (S517: Yes), the vehicle 501 is highly likely to decelerate thereafter and then stop or is highly likely to accelerate as compared with the case where the vehicle speed exceeds the predetermined value. Thus, in these cases, it is necessary to ensure the grip force or stopping force of the vehicle 501 (wheels 502) in advance and therefore, negative cambers are set for the wheels 502 (S506), and then this camber process is terminated.

By so doing, as well as the above described case, the contact pressures Rin of the first treads 521 are increased and the contact pressures Rout of the second treads 522 are reduced (see FIG. 13), so that it is possible to prevent its lock or slip to improve braking performance or acceleration performance of the vehicle 501 by increasing the grip force of the wheels 502 by utilizing the high grip characteristic of the first treads 521.

In addition, after the vehicle 501 stops, it is possible to ensure stopping force of the vehicle 501 (wheels 502) by utilizing the high grip characteristic of the first treads 521, so that it is possible to keep the vehicle 501 stopped at a stable state. Furthermore, when it is started after the stop, the contact pressures Rin of the first treads are increased in advance, so that a slip of the wheels 502 is prevented and it is possible to smoothly start the vehicle 501 again at a high response.

When it is determined in the process of S517 that the vehicle speed is higher than the predetermined value (S517: No), it is presumed that the vehicle speed is not a low speed and a driving force or a braking force at the time of acceleration or deceleration becomes a relatively small value and therefore, subsequently, it is determined whether the turn-signal switch 556 is turned on, that is, whether a right or left turn or a lane change is instructed by the driver (S518).

As a result, when it is determined that the turn-signal switch 556 is turned on (S518: Yes), it is highly likely that concurrently with a right or left turn or a lane change, a deceleration for a turning action of the vehicle 501 or a preparation therefor is performed and therefore, negative cambers are set for the wheels 502 (S506), and then this camber process is terminated.

By so doing, as well as the above described case, the contact pressures Rin of the first treads 521 are increased and the contact pressures Rout of the second treads 522 are reduced (see FIG. 13), so that it is possible to prevent a slip of the wheels 502 by utilizing the high grip characteristic of the first treads 521, and it is possible to improve the turning performance of the vehicle 501.

When it is determined in the process of S518 that the turn-signal switch 556 is not turned on (S518: No), it is presumed that a turning action of the vehicle 501 performed concurrently with a right or left turn or a lane change is not performed and therefore, subsequently, it is determined whether the high grip switch 557 is turned on, that is, whether selecting the high grip characteristic as the characteristic of the wheels 502 is instructed by the driver (S519).

As a result, when it is determined that the high grip switch 557 is turned on (S519: Yes), the high grip characteristic is selected as the characteristic of the wheels 502 and therefore, negative cambers are set for the wheels 502 (S506), and then this camber process is terminated.

By so doing, as well as the above described case, the contact pressures Rin of the first treads 521 are increased and the contact pressures Rout of the second treads 522 are reduced (see FIG. 13), so that it is possible to prevent a slip of the wheels 502 by utilizing the high grip characteristic of the first treads 521, and it is possible to improve the braking performance, acceleration performance or turning performance of the vehicle 501.

When it is determined in the process of S519 that the high grip switch 557 is not turned on (S519: No), subsequently, it is determined whether the operation angle of the steering mechanism 554 is larger than or equal to a predetermined value, that is, whether a predetermined turn or above (sharp turn) is instructed by the driver (S504).

As a result, when it is determined that the operation angle of the steering mechanism 554 is larger than or equal to the predetermined value (S504: Yes), a sharp turn is instructed by the driver and there is a possibility that the wheels 502 slip and the vehicle 501 spins and therefore, negative cambers are set for the wheels 502 (S506), and then this camber process is terminated.

By so doing, as well as the above described case, the contact pressures Rin of the first treads 521 are increased and the contact pressures Rout of the second treads 522 are reduced (see FIG. 13), so that it is possible to prevent a slip of the wheels 502 (a spin of the vehicle 501) by utilizing the high grip characteristic of the first treads 521, and it is possible to improve the turning performance of the vehicle 501.

On the other hand, in the process of S504, when it is determined that the operation angle of the steering mechanism 554 has not reached the predetermined value (S504: No), a sharp turn is not instructed but it is a gentle turn or travelling straight ahead, and, in addition, through the processes from S501 to S503, it is presumed that a road surface condition is good and neither a quick acceleration nor a quick braking is instructed (S501: No, S502: No, S503: No).

Thus, in this case (S501: No, S502: No, S503: No, S504: No), it is not necessary to obtain the high grip characteristic as the performance of the wheels 502, and it is possible to determine that it is desirable to obtain fuel saving performance owing to low rolling resistance and therefore, positive cambers are set for the wheels 502 (S505), and then this camber process is terminated.

By so doing, the contact pressures Rin of the first treads 521 are reduced and the contact pressures Rout of the second treads 522 are increased (see FIG. 14), so that it is possible to improve the rolling efficiency of the wheels 502 by utilizing the low rolling resistance of the second treads 522, and it is possible to improve the fuel saving performance of the vehicle 501.

In this way, according to the present embodiment, the camber angles θR and θL of the wheels 502 are adjusted by the camber angle adjusting devices 504 to change the ratio of the contact pressure Rin in the first tread 521 to the contact pressure Rout in the second tread 522. By so doing, both performances, that is, the acceleration and braking performance and the fuel saving performance that are mutual trade-offs, are achieved.

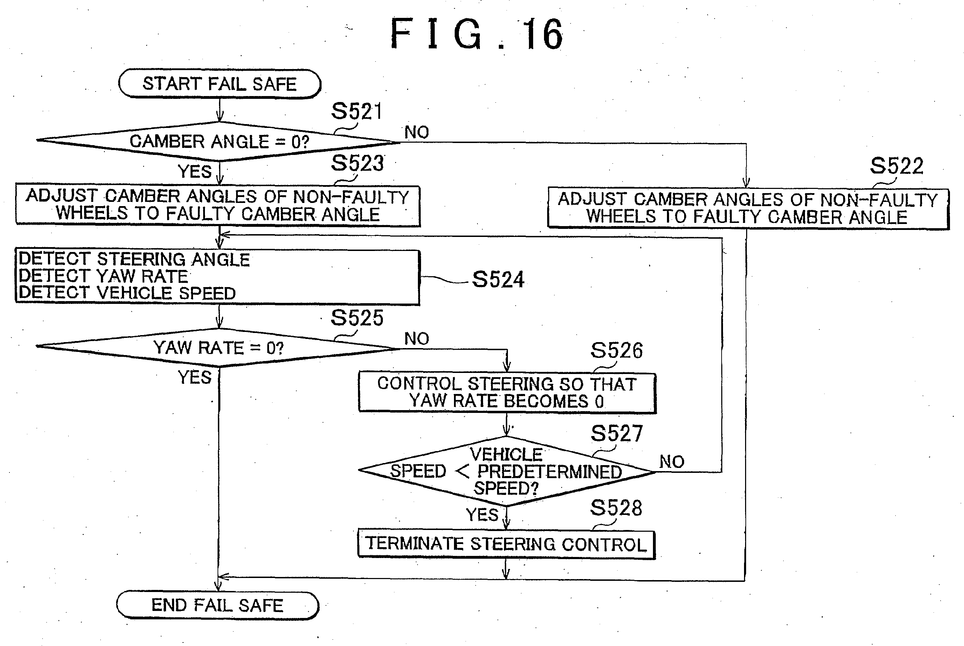

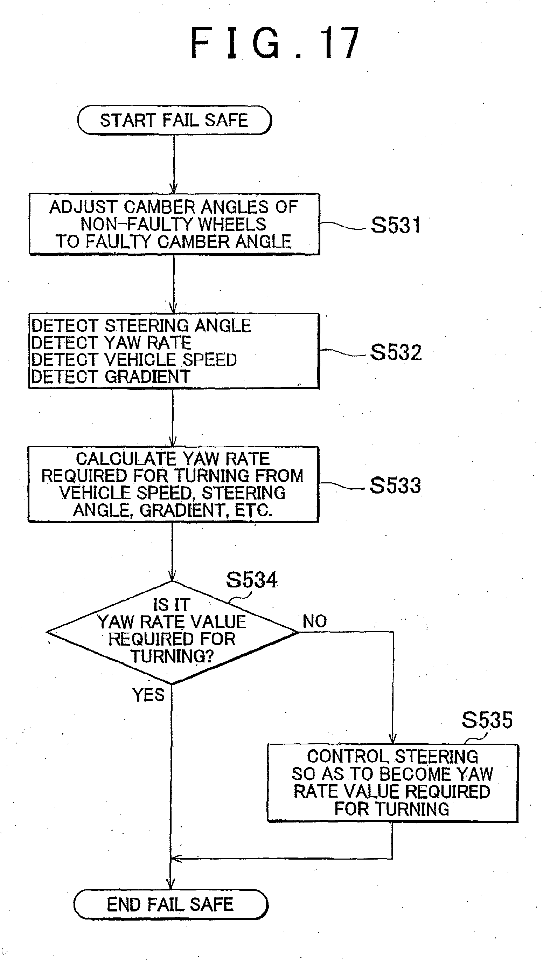

Next, fail-safe control when the camber angle adjusting device 504 becomes uncontrollable because of a failure of the camber angle adjusting device 504, the vehicle control device 5100, or the like, will be described. FIG. 16 is a flowchart of fail-safe control when a camber angle becomes uncontrollable during travelling straight ahead, and FIG. 17 is a flowchart of fail-safe control when a camber angle becomes uncontrollable during turning.

As shown in FIG. 16, when it is determined by the determining means that the camber angle of at least one wheel is uncontrollable during travelling straight ahead, first, it is determined by the camber angle sensor devices 560 whether the uncontrollable camber angle of the wheel 502 is zero (S521). When it is determined in the process of S521 that the camber angle is not zero (S521: No), the control means adjusts the controllable camber angles of the wheels 502 to the uncontrollable camber angle of the wheel 502 (S522), and then fail-safe control is terminated in a state where the vehicle 501 is stabilized.

When it is determined in the process of S521 that the camber angle is zero (S521: Yes), the control means adjusts the controllable camber angles of the wheels 502 to the uncontrollable camber angle of the wheel 502 (S523), and then the vehicle 501 is temporarily stabilized. Next, the steering angle is detected by the steering sensor device 554a, the yaw rate is detected by the yaw rate sensor device 558, and the vehicle speed is detected by the vehicle speed sensor devices 532 or the wheel rotational speed sensor devices 535 (S524).

Subsequently, it is determined whether the yaw rate is zero (S525). When it is determined in the process of S525 that the yaw rate is zero (S525: Yes), fail-safe control is terminated. When it is determined in the process of S525 that the yaw rate is not zero (S525: No), the control means controls the steering mechanism 554 so that the yaw rate becomes zero (S526).

Subsequently, it is determined whether the vehicle speed is lower than a predetermined speed (S527). When it is determined in the process of S527 that the vehicle speed is lower than the predetermined speed (S527: Yes), steering control is terminated (S528), and then fail-safe control is terminated. When it is determined in the process of S527 that the vehicle speed is higher than the predetermined speed (S527: No), the process returns to S524.

As shown in FIG. 17, when it is determined by the determining means that the camber angle of at least one wheel is uncontrollable during turning, first, the controllable camber angles of the wheels 502 are adjusted to the uncontrollable camber angle of the wheel 502 (S531), and then the vehicle 501 is temporarily stabilized. Subsequently, the steering angle is detected by the steering sensor device 554a, the yaw rate is detected by the yaw rate sensor device 558, the vehicle speed is detected by the vehicle speed sensor devices 532 or the wheel rotational speed sensor devices 535, and the gradient is detected by the gradient sensor device 559 (S532). Then, a yaw rate value required for turning is calculated by the calculating means from the steering angle, vehicle speed, gradient, and the like, obtained in the process of S532 (S533).

Subsequently, it is determined whether it is a yaw rate value required for turning (S534). When it is determined in the process of S534 that it is the yaw rate value required for turning (S534: Yes), fail-safe control is terminated. When it is determined in the process of S534 that it is not the yaw rate value required for turning (S534: No), the control means controls the steering mechanism 554 so as to obtain the yaw rate value required for turning (S535).

In this way, in the vehicle control device 5100 that includes: the wheels 502, each of which has the first tread 521 and the second tread 522 that is arranged side by side in the width direction with respect to the first tread 521 and that is arranged at an outer side or inner side of the vehicle 501, the first tread 521 and the second tread 522 being configured to have different characteristics from each other, the first tread 521 being configured to have the characteristic of high grip force as compared with the second tread 522, and the second tread 522 being configured to have the characteristic of low rolling resistance as compared with the first tread 521; the camber angle adjusting devices 504 that adjust the camber angles of the wheels 502; the steering mechanism 554 that steers the wheels 502; the steering sensor device 554a that detects the operated state of the steering mechanism 554; and the camber angle sensor devices 560 that detect the camber angles of the wheels 502, wherein, when it is determined that the camber angle of at least one of the wheels 502 is uncontrollable, the controllable camber angles of the wheels 502 are controlled so as to approach the uncontrollable camber angle of the wheel 502, and the steering mechanism 554 is controlled, so that both high grip characteristic and low fuel consumption are achieved during normal travelling, and, when the camber angle adjusting device 504 fails and the camber angle becomes uncontrollable, the vehicle is stabilized by controlling the steering mechanism 554, and it is possible to reduce fluctuations of the vehicle 501.

In addition, vehicle speed detecting means that detects the vehicle speed of the vehicle 501 and the yaw rate sensor device 558 that detects the yaw rate value of the vehicle 501 are provided, and, when the vehicle speed of the vehicle 501 is higher than or equal to a predetermined speed during travelling straight ahead, the steering mechanism 554 is controlled so that the yaw rate value of the vehicle 501 approaches zero, so that, when the camber angle adjusting device 504 fails and the camber angle becomes uncontrollable, the vehicle 501 is stabilized by controlling the steering mechanism 554, and it is possible to reduce fluctuations of the vehicle 501.

In addition, the vehicle speed detecting means that detects the vehicle speed of the vehicle 501, the yaw rate sensor device 558 that detects the yaw rate value of the vehicle 501 and the gradient sensor device 559 that detects the gradient of the vehicle 501 are provided, the yaw rate value required for turning is calculated from the steering sensor device 554a, the vehicle speed detecting means, the yaw rate sensor device 558 and the gradient sensor device 559 during turning, and the steering mechanism 554 is controlled so as to approach the yaw rate value required for turning, so that, when the camber angle adjusting device 504 fails and the camber angle becomes uncontrollable, the vehicle is stabilized by controlling the steering mechanism 554, and it is made possible to make a smooth turn.

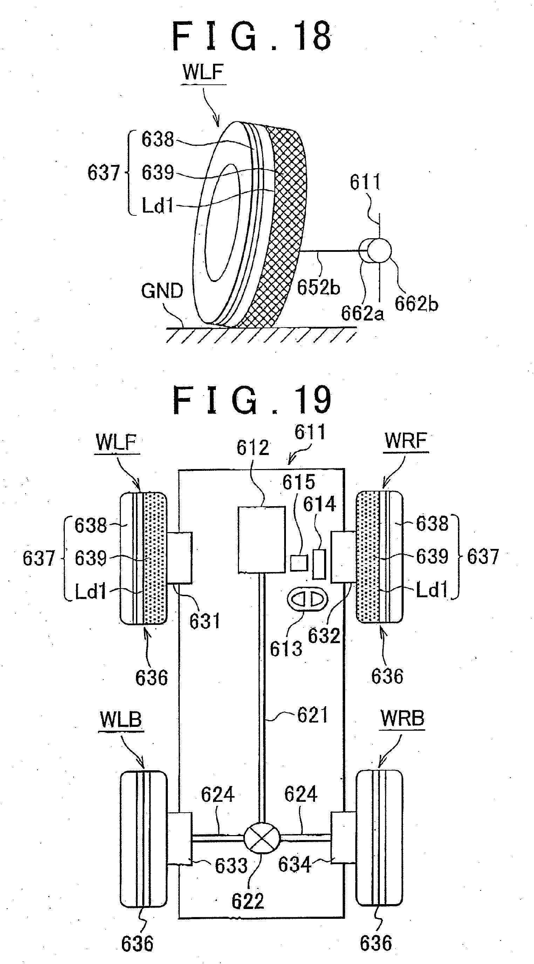

Subsequently, a sixth embodiment will be described in detail with reference to the drawings. FIG. 19 is a conceptual view of a vehicle of the sixth embodiment of the invention.

In the drawing, 611 is a body representing the main body of the vehicle, WLF, WRF, WLB and WRB are front left, front right, rear left and rear right wheels that are arranged rotatably with respect to the body 611. Front wheels are constituted of the wheels WLF and WRF, and rear wheels are constituted of the wheels WLB and WRB.

In addition, 612 is an engine as a driving source, 613 is a steering wheel as a steering device, 614 is an accelerator pedal as an acceleration operating member, 615 is a brake pedal as a deceleration operating member, 621 is a propeller shaft as a rotation transmitting member that transmits rotation, generated by driving the engine 612, to the wheels WLB and WRB that function as drive wheels, 622 is a differential unit that makes the rotation transmitted from the engine 612 differential rotation, and 624 are drive shafts that transmit the rotations made to be differential rotation by the differential unit 622 to the respective wheels WLB and WRB.

Then, 631 to 634 are suspension mechanisms that are respectively arranged between the body 611 and the wheels WLF, WRF, WLB and WRB and that press the wheels WLF, WRF, WLB and WRB against a road surface. Note that a camber angle adjusting device is constituted of the wheels WLF and WRF, the suspension mechanisms 631 and 632, etc., and a suspension system is constituted of the camber angle adjusting device and the body 611.

In the present embodiment, the engine 612 is used as a driving source, the rotation generated by the engine 612 is transmitted to the wheels WLB and WRB via the propeller shaft 621, the differential unit 622 and the drive shafts 624; however, it is applicable that the engine 612 is coupled to the wheels WLF and WRF via drive shafts (not shown), the rotation of the engine 612 is transmitted to the wheels WLF and WRF and the wheels WLF and WRF are used to function as drive wheels. In addition, it is also applicable that wheel motors (not shown) as driving sources are respectively arranged at the wheels WLF, WRF, WLB and WRB, the respective wheel motors are driven to directly rotate the wheels WLF, WRF, WLB and WRB and then the wheels WLF, WRF, WLB and WRB are used to function as drive wheels.

Incidentally, each of the wheels WLF, WRF, WLB and WRB includes a wheel (not shown) formed of aluminum alloy, or the like, and a tire 636 that is fitted and arranged on the outer periphery of the wheel. Then, in the wheels WLF and WRF among the wheels WLF, WRF, WLB and WRB, a tread 637 of the tire 636 is divided into a plurality of areas in the width direction, which are two areas in the present embodiment, and, when a center line that represents the center of the tread 637 in the width direction is a division line Ld1, a low rolling resistance area 638 having the characteristic of a small loss tangent is formed on an outer side (side away from the body 611) with respect to the division line Ld1 and a high grip area 639 having the characteristic of a large loss tangent is formed on an inner side (the body 611 side) with respect to the division line Ld1.

Therefore, the patterns of grooves (hereinafter, referred to as "tread pattern") are formed differently on the outer peripheral surfaces of the low rolling resistance area 638 and high grip area 639. That is, a rib-type tread pattern in which grooves are continuous in the circumferential direction of the tire 636 is formed in the low rolling resistance area 638, and a lug-type tread pattern in which grooves are continuous in the width direction of the tire 636 is formed in the high grip area 639. In addition, a block-type tread pattern having a plurality of independent blocks may be formed in the high grip area 639.

Note that the loss tangent indicates the degree of absorption of energy when the tread 637 deforms, and may be expressed by the ratio of loss shear modulus to storage shear modulus. Because the absorption of energy decreases as the loss tangent is reduced, rolling resistance generated in the tire 636 because of the friction with a road surface is reduced, and grip force representing force gripping the road surface is also reduced. In addition, wear that occurs in the tire 636 is reduced. In contrast to this, because the absorption of energy increases as the loss tangent increases, rolling resistance increases, and grip force also increases. In addition, wear that occurs in the tire 636 increases.

In the present embodiment, the division line Ld1 is set to the center line of the tread 637; however, the division line Ld1 is set at a selected position of the tread 637 in the width direction to vary the ground contact areas of the low rolling resistance area 638 and high grip area 639 from each other.

In the above configured vehicle, when the low rolling resistance area 638 is brought into contact with the road surface during normal travelling, rolling resistance is reduced, so that it is possible to improve fuel economy. In addition, when the high grip area 639 is brought into contact with the road surface at the time of braking of the vehicle, grip force is increased, so that it is possible to reduce a braking distance and prevent a side slip.

Therefore, in the present embodiment, in each of the suspension mechanisms 631 and 632, the camber angle of the tire 636 is configured to be adjusted based on a mode of travelling of the vehicle.

Then, the suspension mechanisms 631 and 632 will be described.

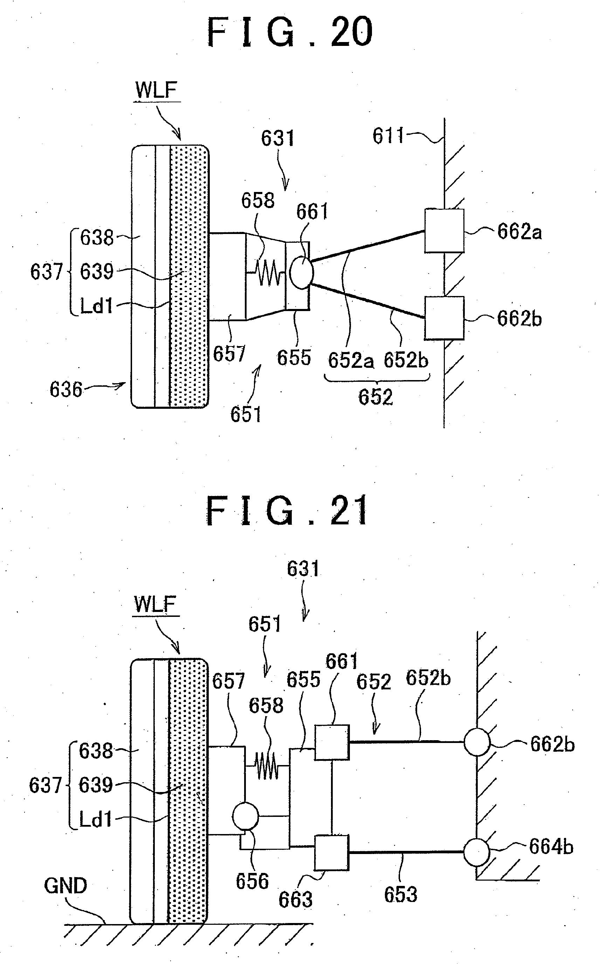

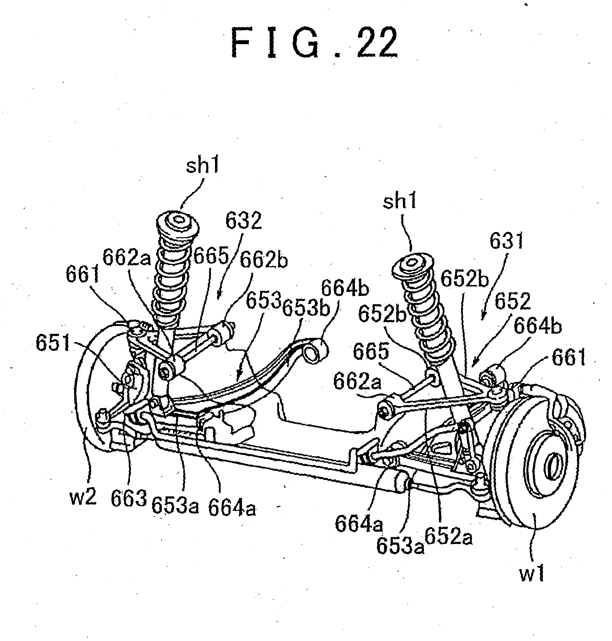

FIG. 20 is a plan view that shows the suspension system in the sixth embodiment of the invention, FIG. 21 is a side view that shows the suspension system in the sixth embodiment of the invention, and FIG. 22 is a perspective view that shows the suspension system in the sixth embodiment of the invention. Note that FIG. 20 and 4 show the suspension mechanism 631.

In the drawings, 611 is the body, WLF is the wheel, 631 and 632 are the suspension mechanisms, 636 is the tire, 637 is the tread, 638 is the low rolling resistance area, 639 is the high grip area, Ld1 is the division line, and GND is a road surface.

The suspension mechanisms 631 and 632 each have a double wishbone type suspension structure and include a knuckle unit 651 as a supporting portion that is connected to a wheel w1 or w2 of the wheel WLF or WRF and that rotatably supports the wheel WLF or WRF, an upper arm 652 as a first arm that couples the knuckle unit 651 to the body 611 at the upper end portion of the knuckle unit 651 and that movably supports the wheel WLF, a lower arm 653 as a second arm that couples the knuckle unit 651 to the body 611 at the lower end portion of the knuckle unit 651 and that movably supports the wheel WLF, a shock absorber sh1 that couples the body 611 to the lower arm 653, and the like.

In addition, the knuckle unit 651 includes a knuckle arm 655 as a first element that is arranged adjacent to the body 611 vertically movably with respect to the body 611, a camber plate 657 as a second element that is arranged at the wheel WLF or WRF side, that is fixed to the wheel w1 or w2 and that is arranged on the knuckle arm 655 oscillatably about a camber axis 656 as an oscillation center, a spring 658 as an urging member that is arranged between the knuckle arm 655 and the camber plate 657 above the camber axis 656 and that urges the camber plate 657 away from the knuckle arm 655 (in a counterclockwise direction in FIG. 20 and 4) with a predetermined urging force, and the like.

The upper arm 652 has a V shape, and includes two arm portions 652a and 652b that are integrated at the knuckle unit 651 side and that are formed to extend obliquely forward and obliquely rearward so as to expand toward the body 611. In addition, the upper arm 652 is oscillatably coupled to the knuckle arm 655 by a ball joint 661 as a coupling element at one portion at the knuckle unit 651 side and is oscillatably coupled to the body 611 by cylindrical bushings 662a and 662b as coupling elements at two portions at the body 611 side. In this case, the arm portion 652a and the bushing 662a are arranged on the front side in the travelling direction of the vehicle with respect to the arm portion 652b and the bushing 662b.

The lower arm 653, as well as the upper arm 652, has a V shape and includes two arm portions 653a and 653b that are integrated at the knuckle unit 651 side and that are formed to extend so as to expand obliquely forward and obliquely rearward toward the body 611. Then, the lower arm 653 is oscillatably coupled to the knuckle arm 655 by a ball joint 663 as a coupling element at one portion at the knuckle unit 651 side and is oscillatably coupled to the body 611 by cylindrical bushings 664a and 664b as coupling elements at two portions at the body 611 side. In this case, the arm portion 653a and the bushing 664a are arranged on the front side in the travelling direction of the vehicle with respect to the arm portion 653b and the bushing 664b.

In addition, the bushings 662a and 662b; 664a and 664b are fitted to surround beams 665 (in FIG. 22, only the beam 665 at the bushings 662a and 662b side is shown) fixed to the body 611.

Note that the ball joint 663 is located on the front side in the travelling direction of the vehicle with respect to the ball joint 661, and an imaginary line that connects the ball joints 661 and 663 is inclined so as to form a predetermined caster angle with respect to the body 611. That is, the wheel WLF functions as a steered wheel and is supported with a caster angle.

Incidentally, the wheels WLF and WRF are supported so that a toe angle that necessarily becomes toe out because of inertia of the vehicle during braking of the vehicle is set. Then, when the toe angle is set, camber angles having a negative value (negative camber) are set for the wheels WLF and WRF.

Therefore, the coupling rigidity of the front bushings 662a and 664a to the body 611 is smaller than the coupling rigidity of the rear bushings 662b and 664b to the body 611.

Next, the structures of the bushings 662a, 662b, 664a and 664b will be described. In this case, because the front bushings 662a and 664a have the same structure and the rear bushings 662b and 664b have the same structure, the front bushing 662a and the rear bushing 662b will be described.

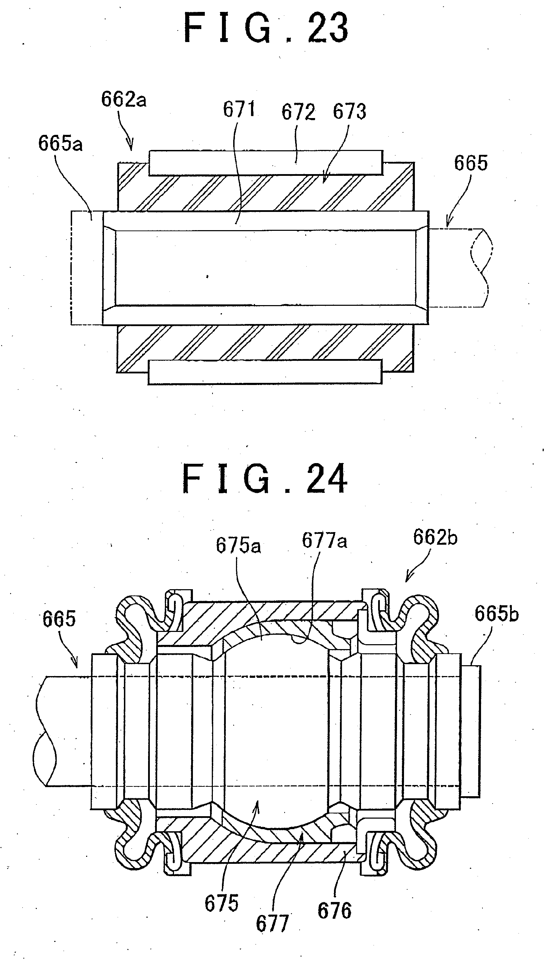

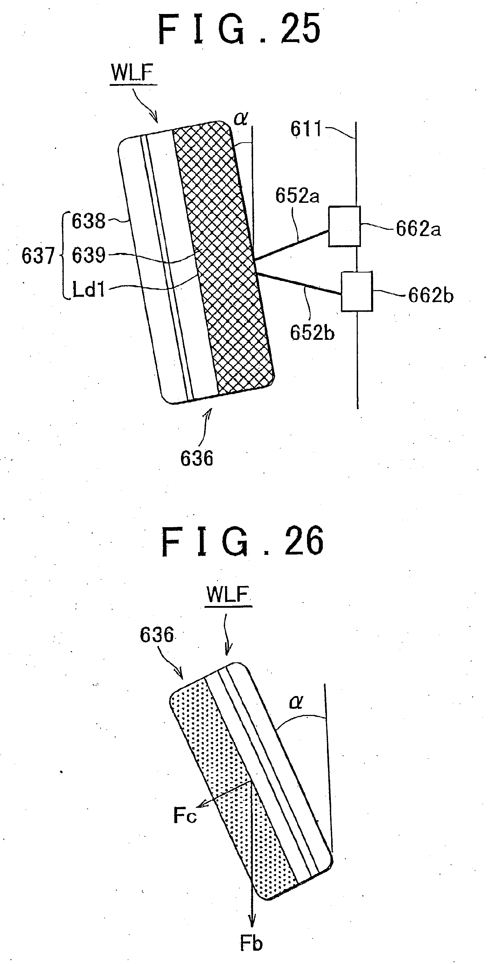

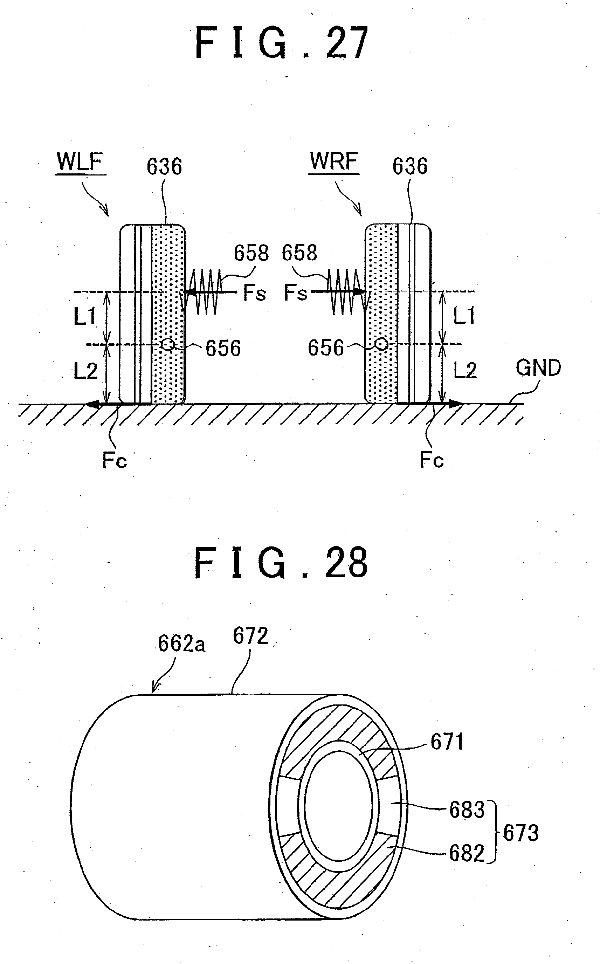

FIG. 18 is a diagram that shows a state where a camber angle is set for the wheel in the sixth embodiment of the invention, FIG. 23 is a cross-sectional view that shows the structure of the front bushing in the sixth embodiment of the invention, FIG. 24 is a cross-sectional view that shows the structure of the rear bushing in the sixth embodiment of the invention, FIG. 25 is a diagram that shows a state where a toe angle is set for the wheel in the sixth embodiment of the invention, FIG. 26 is a first view that illustrates a side force during braking in the sixth embodiment of the invention, and FIG. 27 is a second view that illustrates a side force during braking in the sixth embodiment of the invention.

The front bushing 662a includes an inner sleeve 671 as a first member that is formed of a deformation-resistant high rigidity material, such as a metal, an outer sleeve 672 as a second member that is arranged concentrically with the inner sleeve 671 and that is formed of a metal and an intermediate member 673 as a third member that is arranged between the inner sleeve 671 and the outer sleeve 672 and that is formed of an easily deformable low rigidity material, such as rubber, the inner sleeve 671 is arranged outside the beam 665 so as to be relatively pivotable, and the arm portion 652a is fixed to the outer sleeve 672. A flange portion 665a is formed at the front end of the beam 665 so as to project radially outward in order to prevent the bushing 662a from slipping off from the beam 665. The inner sleeve 671 and the outer sleeve 672 function as rigid bodies, and the intermediate member 673 functions as an elastic body.

In addition, the rear bushing 662b includes an inner sleeve 675 as a first member that is formed of a metal, an outer sleeve 676 as a second member that is arranged concentrically with the inner sleeve 675 and that is formed of a metal and an intermediate member 677 as a third member that is arranged between the inner sleeve 675 and the outer sleeve 676 and that is formed of a metal, the inner sleeve 675 is relatively pivotably arranged outside the beam 665, and the arm portion 652b is fixed to the outer sleeve 675. A spherical bearing is constituted of the inner sleeve 675 and the outer sleeve 676, a spherical portion 675a that protrudes in a convex shape radially outward is formed on the outer peripheral surface of the center portion of the inner sleeve 675 in the axial direction, and a supporting portion 677a that has a shape corresponding to the spherical portion 675a and that oscillatably and rotatably supports the spherical portion 675a is formed on the inner peripheral surface of the intermediate member 677.

In addition, a flange portion 665b for preventing the bushing 662b from slipping off from the beam 665 is formed at the rear end of the beam 665 so as to protrude radially outward. The inner sleeve 675, the outer sleeve 676 and the outer sleeve 676 function as rigid bodies.

In this case, in the front bushing 662a, the inner sleeve 671 and the outer sleeve 672 function as rigid bodies, and the intermediate member 673 functions as an elastic body, so that, as external force is exerted, the outer sleeve 672 is moved radially with respect to the inner sleeve 671 to be decentered. In contrast to this, in the rear bushing 662b, the inner sleeve 675, the outer sleeve 676 and the outer sleeve 676 function as rigid bodies, so that, even when external force is exerted, the outer sleeve 676 is not moved radially with respect to the inner sleeve 675 and is not decentered.

That is, as described above, the coupling rigidity of the front bushing 662a to the body 611 is smaller than the coupling rigidity of the rear bushing 662b to the body 611.

Incidentally, for example, as the driver depresses the brake pedal 615 (FIG. 19) to brake the vehicle, the wheels WLF and WRF are caused to move forward by the inertia of the vehicle; however, the rotation of the wheels WLF and WRF is suppressed or inhibited by braking, and rolling resistance occurs in the wheels WLF and WRF in a direction opposite to the direction of the tires 636, indicating a direction in which the tires 636 roll.

Then, at this time, because the coupling rigidity of the front bushing 662a to the body 611 is smaller than the coupling rigidity of the rear bushing 662b to the body 611, the outer sleeve 676 is not decentered with respect to the inner sleeve 675 in the rear bushing 662b, whereas the outer sleeve 672 is decentered away from the body 611 with respect to the inner sleeve 671 in the front bushing 662a.

Thus, the wheels WLF and WRF are opened, and toe angles $\alpha$ as shown in FIG. 26 are set for the wheels WLF and WRF in mutually toe-out directions.

Then, as a brake force Fb is generated on the ground contact surface of each tire 636 with the road surface GND toward an opposite side in the travelling direction of the vehicle concurrently with braking of the vehicle, the component force of the brake force Fb in a direction parallel to the rotation axis of the wheel WLF or WRF occurs as a side force Fc.

$$Fc = Fb \bullet \sin\alpha$$

In this case, as shown in FIG. 27, the side force Fc occurs outward on the ground contact surface of each tire 636 with the road surface GND. In addition, the spring 658 urges the wheel WLF or WRF away from the body with an urging force Fs.

Thus, where the distance between the camber axis 656 and the center of the spring 658 is L1 and the distance between the camber axis 656 and the road surface GND is L2, moments occur in the wheel WLF about the camber axis 656 by the side force Fc and the urging force Fs in mutually opposite directions. In this case, as the moments balance,

$$Fs \bullet L1 = Fc \bullet L2 \text{ holds,}$$

and the urging force Fs at that time is as follows.

$$Fs = Fc \bullet L2/L1$$

Then, when the urging force Fs is set so as to be smaller than a value Fc·L2/L1, as shown in FIG. 18, camber angles having a negative value are formed in the wheels WLF and WRF with the side force Fc as a source.

Thus, as shown in FIG. 18, only the high grip area 639 is brought into contact with the ground GND in the tread 637 of each of the wheels WLF and WRF. Thus, it is possible to stop the wheels WLF and WRF to stop the vehicle while generating sufficiently large grip force.

In this way, in the present embodiment, because it is possible to generate sufficiently large grip force in each of the wheels WLF and WRF during braking, it is possible to prevent a braking distance from increasing.

In addition, because it is not necessary to arrange actuators for setting camber angles for the wheels WLF and WRF, it is possible to reduce energy consumed during braking. Thus, it is possible to improve fuel economy.

In the present embodiment, the camber axis 656 is arranged at the lower side in the knuckle unit 651 and the spring 658 is arranged at the upper side in the knuckle unit 651; instead, the camber axis 656 may be arranged at the upper side in the knuckle unit 651 and the spring 658 may be arranged at the lower side in the knuckle unit 651. In this case, the spring 658 urges the camber plate 657 toward a side to approach the knuckle arm 655 in order to form a camber angle having a negative value.

In addition, in the present embodiment, in the tread 637 of the tire 636 of each of the wheels WLF and WRF, the low rolling resistance area 638 is formed on the outer side with respect to the division line Ld1 and the high grip area 639 is formed on the inner side with respect to the division line Ld1; however, when three or more areas are formed on the tread 637 in the width direction, a high grip area is formed on the innermost side among the areas, and the high grip area may be brought into contact with the road surface as a camber angle having a negative value is formed.

Note that the values of the toe angle α and camber angle are varied by changing the hardness of the intermediate member 673. As the hardness of the intermediate member 673 is increased, the coupling rigidity of the front bushing 662a to the body 611 is increased by that much, so that the toe angle and the camber angle are reduced. In addition, as the hardness of the intermediate member 673 is reduced, the coupling rigidity of the front bushing 662a to the body 611 is reduced by that much, so that the toe angle and the camber angle increase.

Note that the values of the tow angle α and camber angle may be varied by making the hardness of the intermediate member 673 constant and changing the degree of filling of the intermediate member 673 between the inner sleeve 671 and the outer sleeve 672.

FIG. 28 is a perspective view that shows an alternative example of the front bushing in the sixth embodiment of the invention.

In the drawing, the intermediate member 673 is an intermediate member that is formed of an easily deformable low rigidity material, such as rubber, and the intermediate member 673 is locally filled at a predetermined degree of filling in a space between the inner sleeve 671 and the outer sleeve 672. Therefore, the intermediate member 673 includes a plurality of fillers 682 having an arc shape and formed of rubber and gaps 683 formed between the fillers 682. Note that the degree of filling indicates the ratio of the volume of the fillers 682 to the space between the inner sleeve 671 and the outer sleeve 672.

In this case, as the degree of filling of the intermediate member 673 is increased, the coupling rigidity of the front bushing 662a to the body 611 is increased by that much, so that the toe angle α and the camber angle are reduced. In addition, as the degree of filling of the intermediate member 673 is decreased, the coupling rigidity of the front bushing 662a to the body 611 is reduced by that much, so that the toe angle α and the camber angle increase.

Next, a seventh embodiment of the invention, applied to a strut-type suspension structure, will be described. Note that like reference numerals are assigned to components having the same structures as those of the sixth embodiment, and the advantageous effects of the invention due to the same structures incorporate the advantageous effects of that embodiment.

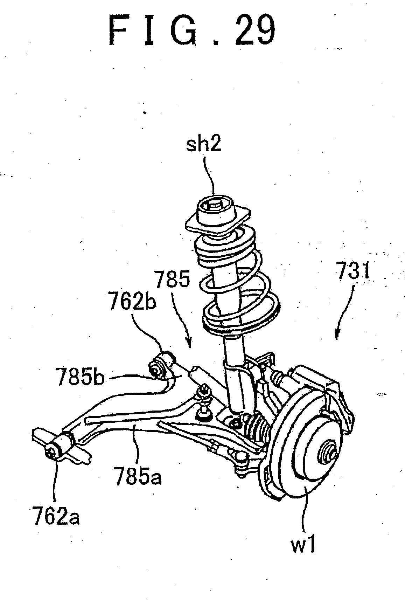

FIG. 29 is a perspective view that shows a suspension system in the seventh embodiment of the invention.

A suspension mechanism 731 in the second embodiment has a strut type suspension structure, and includes a supporting portion (not shown) that is connected to a wheel w1 of a wheel WLF, that couples the wheel w1 to a body 611 and that rotatably supports the wheel WLF, an arm 785 that is oscillatably arranged on the supporting portion, a shock absorber 2 that couples the body 611 and the supporting portion, etc.

The arm 785 has a V shape, and includes two arm portions 785a and 785b that are integrated at the wheel w1 side and that are formed to extend so as to expand toward the body 611. In addition, the arm 785 is oscillatably coupled to the body 611 by a ball joint (not shown) as a coupling element at one portion at the wheel w1 side, and is oscillatably coupled to the body 611 by cylindrical bushings 762a and 762b as coupling elements at two portions at the body 611 side.

In this case, as in the case of the sixth embodiment, the wheels WLF and WRF are supported so as to set toe angles that definitely become toe out because of inertia of the vehicle during braking of the vehicle. Then, by setting the toe angles, camber angles having a negative value are set for the wheels WLF and WRF.

The invention is described based on the embodiments above; however, the invention is not limited to the above embodiments, and it is easily understood that various improvements and modifications are possible without departing from the scope of the invention.

For example, numerical values mentioned in the above embodiments are illustrative, and, of course, other numerical values may be employed. In addition, of course, part or all of the configuration of each of the above embodiments may be combined with part or all of the configuration of the other embodiments.

In addition, in the above embodiments, it is configured so that, when it is determined through the slip prevention process that there is a wheel that is likely to slip among all the wheels 2 during travelling, a negative camber of a prescribed angle is set for the wheel that is likely to slip; instead, it may be configured so that a positive camber (camber angle in a plus direction) is set.

In addition, in the above embodiments, the strut type suspension is exemplified as the suspension device 4; however, even when the other type, for example, a double wishbone type suspension, a multi-link type suspension, or the like, is used, it is similarly applicable.

In addition, in the second embodiment, it is configured so that the wheels 2 having the tread surface 2a with a small curvature are used to implement reduction in vehicle height as camber angles are set; instead, it may also be configured to utilize a structure that camber angles are set for the wheels 2 to reduce the vehicle height as the structures of the suspension devices 4.

In addition, in the above embodiments, it is configured so that the left wheels and the right wheels are compared to compare a side that is likely to slip and then camber angles (negative cambers) are set for the wheels at the side that is likely to slip; however, it may also be configured so that a side that is likely to slip is compared between another combination, for example, between front wheels and rear wheels, and then camber angles are set for the wheels at the side that is likely to slip.

In addition, in the above embodiments, it is configured so that it is determined whether there is one wheel that is likely to slip among a plurality of wheels 2 (in the above embodiments, four wheels 2) and then a camber angle (negative camber) is set for the one wheel that is likely to slip; instead, it may also be configured so that a likelihood of slip of a plurality of wheels (for example, two wheels) is determined and then a camber angle is set for one wheel that is likely to slip.

In addition, as the states of the respective wheels 2 for determining a wheel that is likely to slip, it is configured to use the rotational speeds of the respective wheels 2 in the first embodiment, the ground contact forces on the respective wheels 2 in the third embodiment and the strokes of the respective wheels 2 in the fourth embodiment; however, it may also be configured so that a plurality of types of parameters are used as the states of the respective wheels 2, for example, using both the rotational speeds and ground contact forces of the respective wheels 2, and then a wheel that is likely to slip is determined based on a combination of them.

In addition, in the above embodiments, it is configured so that the left and right front wheels (2FL and 2FR) are driven by the wheel driving device 3 for rotation; however, irrespective of the configuration of the wheel driving device, the invention may be applied as long as a vehicle that is able to set a camber angle for a wheel. For example, even when a vehicle includes a wheel motor or an engine as the wheel driving device, it is applicable that a vehicle is able to set a camber angle for a wheel.

Hereinafter, alternative examples of the invention will be described. A first alternative example (vehicle control devices A1 to A3) relates to a vehicle control device that adjusts the camber angles of wheels and a steering mechanism.

Here, it is attempted to improve turning performance in such a manner that the camber angle (angle made between the tire center and a ground surface) of each wheel is increased in a minus direction to sufficiently bring out the performance of tires. This is because, when the camber angle is, for example, set at 0°, the tread contacts the ground surface all over the range in the width direction during travelling straight ahead; however, the inner tread separates from the ground surface because of a roll of the vehicle due to centrifugal force during turning and sufficient turning performance cannot be obtained. Thus, by setting the camber angle in a minus direction in advance, the tread can contact the ground surface widely during turning, so that it is possible to improve turning performance.

However, when wheels are assembled to the vehicle with a large camber angle in a minus direction, the turning performance of the tires improves; however, the contact pressure at inner tread end portion increases during travelling straight ahead, so that there has been a problem that the tires wear on one side to be uneconomic and the temperature of the tread end portion becomes a high temperature.

Then, there is described a technique ensuring wear resistance, heat resistance and high grip characteristic, in which, when wheels are assembled to the vehicle at a large camber angle in a minus direction, a side portion at one side of a tire is reinforced stronger than a side portion at the other side to increase the rigidity, and a tread rubber is divided into two and then the one side is made lower in hardness or thicker in the tread thickness of a tread end portion than the other side (Patent Literature 1: Japanese Patent Application Publication No. 2-185802).

In addition, a suspension system that actively controls the camber angle of a wheel by the driving force of an actuator is disclosed (Patent Literature 2: United States Patent No. 6,347,802).

However, in the former technique, sufficient performance may be exhibited in terms of maintaining high grip characteristic during turning; however, there has been a problem that it is insufficient in terms of achieving both high grip characteristic and low fuel economy (low rolling resistance). In addition, in the above described conventional technique, high grip characteristic is limited to during turning, and there has been a problem that it is, for example, insufficient to exhibit high grip characteristic at the time of quick acceleration or quick braking during travelling straight ahead. Similarly, in the latter technique, there has been a problem that it is insufficient in terms of achieving both high grip characteristic and low fuel economy. In addition, nothing is disclosed about measures against the case where a camber angle becomes uncontrollable.

The first alternative example is made in order to solve the above described problems, and it is an object to provide a vehicle control device that is able to achieve both high grip characteristic and low fuel economy and is able to stably brake the vehicle when the camber angle becomes uncontrollable.

A vehicle control device A1 includes wheels, each of which has a first tread and a second tread that is arranged side by side in a width direction with respect to the first tread and that is arranged at an outer side or inner side of a vehicle, the first tread and the second tread being configured to have different characteristics from each other, the first tread being configured to have the characteristic of high grip force as compared with the second tread, and the second tread being configured to have the characteristic of low rolling resistance as compared with the first tread; a camber angle adjusting device that adjusts a camber angle of each wheel; a steering mechanism that steers the wheels; a steering sensor device that detects an operated state of the steering mechanism; and a camber angle sensor device that detects the camber angle of each wheel, wherein, when it is determined that the camber angle of at least one of the wheels is uncontrollable, the controllable camber angles of the wheels are controlled so as to approach the uncontrollable camber angle of the wheel, and the steering mechanism is controlled.

With the vehicle control device A1, wheels, each of which has a first tread and a second tread that is arranged side by side in a width direction with respect to the first tread and that is arranged at an outer side or inner side of a vehicle, the first tread and the second tread being configured to have different characteristics from each other, the first tread being configured to have the characteristic of high grip force as compared with the second tread, and the second tread being configured to have the characteristic of low rolling resistance as compared with the first tread; a camber angle adjusting device that adjusts a camber angle of each wheel; a steering mechanism that steers the wheels; a steering sensor device that detects an operated state of the steering mechanism; and a camber angle sensor device that detects the camber angle of each wheel, are provided, wherein, when it is determined that the camber angle of at least one of the wheels is uncontrollable, the controllable camber angles of the wheels are controlled so as to approach the uncontrollable camber angle of the wheel, and the steering mechanism is controlled, so that both high grip characteristic and low fuel economy are achieved during normal travelling, and, when the camber angle adjusting device fails and the camber angle becomes uncontrollable, the steering mechanism is controlled to stabilize the vehicle, and it is possible to reduce vibrations of the vehicle.

A vehicle control device A2 includes, in the vehicle control device A1, vehicle speed detecting means that detects the vehicle speed of the vehicle and a yaw rate sensor device that detects the yaw rate value of the vehicle, wherein, when the vehicle speed of the vehicle is higher than or equal to a predetermined speed during travelling straight ahead, the steering mechanism is controlled so that the yaw rate value of the vehicle approaches 0.

With the vehicle control device A2, in addition to the advantageous effect obtained by the vehicle control device A1, the vehicle speed detecting means that detects the vehicle speed of the vehicle and the yaw rate sensor device that detects the yaw rate value of the vehicle are provided, wherein, when the vehicle speed of the vehicle is higher than or equal to a predetermined speed during travelling straight ahead, the steering mechanism is controlled so that the yaw rate value of the vehicle approaches to 0, so that, when the camber angle adjusting device fails and the camber angle becomes uncontrollable, the steering mechanism is controlled to stabilize the vehicle, and it is possible to reduce vibrations of the vehicle.

A vehicle control device A3 includes, in the vehicle control device A1, vehicle speed detecting means that detects the vehicle speed of the vehicle, a yaw rate sensor device that detects the yaw rate value of the vehicle and a gradient sensor device that detects the gradient of the vehicle, wherein a yaw rate value required for turning is calculated from the steering sensor device, the vehicle speed detecting means, the yaw rate sensor device and the gradient sensor device during turning, and the steering mechanism is controlled so as to approach the yaw rate value required for turning.

With the vehicle control device A3, in addition to the advantageous effects obtained by the vehicle control device A1, vehicle speed detecting means that detects the vehicle speed of the vehicle, a yaw rate sensor device that detects the yaw rate value of the vehicle and a gradient sensor device that detects the gradient of the vehicle are provided, wherein a yaw rate value required for turning is calculated from the steering sensor device, the vehicle speed detecting means, the yaw rate sensor device and the gradient sensor device during turning, and the steering mechanism is controlled so as to approach the yaw rate value required for turning, so that, when the camber angle adjusting device fails and the camber angle becomes uncontrollable, the steering is controlled to stabilize the vehicle, and it is possible to smoothly turn.

A second alternative example (suspension systems B1 to B4) relates to a suspension system. Here, conventionally, in order to improve fuel economy, for example, by reducing the loss tangent of a tread rubber, a vehicle equipped with a tire having reduced rolling resistance is provided.

However, when rolling resistance is reduced, the grip force of the tire is reduced by that much, so that the braking distance at the time of braking increases or a side slip tends to occur during turning.

Then, there is provided a tire in which a tread is divided in the width direction, a center area, that is, a center portion, is formed of a material having a small loss tangent, and areas on both sides of the center portion, that is, shoulder portions, are formed of a material having a large loss tangent (for example, see Patent Literature 1: Japanese Patent Application Publication No. 2005-22622). However, in the conventional vehicle, it is impossible to reliably bring the center portion into contact with a road surface when the vehicle is travelling straight ahead, that is, during normal travelling, and to reliably bring the shoulder portions into contact with a road surface during braking of the vehicle, and it is impossible to sufficiently increase grip force during braking.

It is an object of the second alternative example to provide a suspension system that solves the problem of the conventional vehicle to make it possible to generate sufficiently large grip force during braking of the vehicle.

In a suspension system B1 that includes a body of a vehicle; a plurality of wheels arranged rotatably with respect to the body; and a suspension mechanism that is arranged between the body and each wheel, wherein a high grip area having increased grip force against a road surface is formed on a tire of each wheel, the suspension system B1 is **characterized in that** the suspension mechanism has a structure that, during braking of the vehicle, toe angles for toe out are set for the front wheels by inertia of the vehicle and then camber angles of negative values are set for the front wheels as the toe angles are set to thereby bring the high grip areas into contact with the road surface.

With the suspension system B1, a body of a vehicle; a plurality of wheels arranged rotatably with respect to the body; and a suspension mechanism that is arranged between the body and each wheel are provided, wherein a high grip area having increased grip force against a road surface is formed on a tire of each wheel. Then, the suspension mechanism has a structure that, during braking of the vehicle, toe angles for toe out are set for the front wheels by inertia of the vehicle and then camber angles of negative values are set for the front wheels as the toe angles are set to thereby bring the high grip area into contact with the road surface. In this case, during braking of the vehicle, toe angles for toe out are set for the front wheels by inertia of the vehicle and then camber angles of negative values are set for the front wheels as the toe angles are set to thereby bring the high grip area into contact with the road surface. Thus, it is possible to generate sufficiently large grip force during braking of the vehicle.

A suspension system B2 is configured so that, in the suspension system B1, the suspension mechanism has supporting portions that rotatably support the front wheels, and a coupling rigidity between the body and an arm that is formed to extend obliquely forward from each supporting portion is lower than a coupling rigidity between the body and an arm that is formed to extend obliquely rearward from each supporting portion.

A suspension system B3 is configured so that, in the suspension system B2, each coupling element that couples the body to each arm is a bushing.

A suspension system B4 is configured so that, in the suspension system B2, each supporting portion includes a first element that is arranged at a body side, a second element that rotatably supports the wheel and that is arranged oscillatably about a camber axis as an oscillation center with respect to the first element and an urging member that is arranged between the first and second elements and that urges the second element with a predetermined urging force.

With the suspension system B4, each supporting portion includes a first element that is arranged at a body side, a second element that rotatably supports the wheel and that is arranged oscillatably about a camber axis as an oscillation center with respect to the first element and an urging member that is arranged between the first and second elements and that urges the second element with a predetermined urging force. In this case, the second element is pivoted in a predetermined direction in response to a side force exerted on the tire and an urging force of the urging member, a camber angle is set for each wheel and then the high grip areas are brought into contact with the road surface, so that it is possible to generate sufficiently large grip force during braking of the vehicle.

### Claims

1. A control device used in a vehicle that includes a plurality of wheels and a camber angle adjusting device that adjusts camber angles of the wheels, **characterized in that**
   the vehicle includes wheel state detecting means that detects a state of each of the wheels during travelling, and
   the control device comprises:

   determining means that determines whether there is a wheel that is likely to slip among the plurality of wheels, based on a comparison among the states of the respective wheels, detected by the wheel state detecting means; and
   camber angle adjusting means that, when it is determined by the determining means that there is the wheel that is likely to slip, actuates the camber angle adjusting device to adjust the camber angle of the wheel determined to be likely to slip so as to be inclined at a predetermined angle toward a negative side or a positive side.

2. The control device according to claim 1, wherein the determining means determines whether there is one wheel that is likely to slip among the plurality of wheels, based on a comparison among the states of the respective wheels, detected by the wheel state detecting means.

3. A vehicle **characterized by** comprising:

   a wheel;
   a camber angle adjusting device that adjusts a camber angle of the wheel;
   wheel state detecting means that detects a state of the wheel; and
   the control device according to claim 1 or 2, wherein
   the wheel is configured so that a curvature of a tread surface is larger than a predetermined value, and
   the camber angle adjusting device is configured so that a camber rotation axis of the wheel is set below a rotation axis of the wheel.

4. A vehicle **characterized by** comprising:

a wheel;
a camber angle adjusting device that adjusts a camber angle of the wheel;
wheel state detecting means that detects a state of the wheel; and
the control device according to claim 1 or 2, wherein
the wheel is configured so that a curvature of a tread surface is smaller than a predetermined value, and
the camber angle adjusting device is configured so that a camber rotation axis of the wheel is set above a rotation axis of the wheel.

5. The vehicle according to claim 3 or 4, wherein the wheel state detecting means detects a rotational speed of the wheel.

6. The vehicle according to claim 3 or 4, wherein the wheel state detecting means detects a ground contact force on the wheel.

7. The vehicle according to claim 3 or 4, further comprising a suspension that suspends the wheel on a vehicle body, wherein the wheel state detecting means detects a stroke of the suspension.

# F I G . 1

# FIG.2

# F I G . 3

# FIG.4A

(PROCESS EXECUTED BY CONTROL DEVICE)

( SLIP PREVENTION PROCESS )

| ACQUIRE ROTATIONAL SPEEDS OF RESPECTIVE WHEELS FOR ALL WHEELS |~S11

| ACQUIRE ACCELERATOR OPENING DEGREE |~S12

| ACQUIRE BRAKE DEPRESSION AMOUNT |~S13

S14
IS ACCELERATOR OPENING DEGREE HIGHER THAN OR EQUAL TO PRESCRIBED VALUE ?  —— NO ——> ( 1 )

YES

S15
IS THERE WHEEL THAT ROTATES AT ROTATIONAL SPEED HIGHER THAN OR EQUAL TO PRESCRIBED VALUE ABOVE AVERAGE OF ROTATIONAL SPEEDS OF OTHER WHEELS, AND DOES DISPERSION OF ROTATIONAL SPEEDS OF OTHER WHEELS FALL WITHIN PRESCRIBED VALUE ?  —— NO ——> ( 2 )

YES

| SET NEGATIVE CAMBER OF PRESCRIBED ANGLE FOR APPLICABLE WHEEL |~S16

( 3 )

( 4 )

( END )

34

FIG.4B

① →

② →

S19 IS BRAKE DEPRESSION AMOUNT LARGER THAN OR EQUAL TO PRESCRIBED VALUE ? — NO → END

S17 IS THERE DIFFERENCE LARGER THAN OR EQUAL TO PRESCRIBED VALUE BETWEEN AVERAGE OF ROTATIONAL SPEEDS OF LEFT WHEELS AND AVERAGE OF ROTATIONAL SPEEDS OF RIGHT WHEELS, AND DO DISPERSION OF ROTATIONAL SPEEDS OF LEFT WHEELS AND DISPERSION OF ROTATIONAL SPEEDS OF RIGHT WHEELS EACH FALL WITHIN PRESCRIBED VALUE ? — NO → ③

YES (from S19) ↓

S20 IS THERE WHEEL THAT ROTATES AT ROTATIONAL SPEED LOWER THAN OR EQUAL TO PRESCRIBED VALUE BELOW AVERAGE OF ROTATIONAL SPEEDS OF OTHER WHEELS, AND DOES DISPERSION OF ROTATIONAL SPEEDS OF OTHER WHEELS FALL WITHIN PRESCRIBED VALUE ? — NO → ⑤

YES (from S17) ↓

S18 SET NEGATIVE CAMBER OF PRESCRIBED VALUE FOR HIGH ROTATIONAL SPEED WHEELS

YES (from S20) ↓

S21 SET NEGATIVE CAMBER OF PRESCRIBED ANGLE FOR APPLICABLE WHEEL → ⑥

④

⑦

EP 2 241 462 A1

35

# F I G . 4C

⑤ ──────────────┐
                 ↓

S22

IS THERE
DIFFERENCE LARGER THAN
OR EQUAL TO PRESCRIBED VALUE
BETWEEN AVERAGE OF ROTATIONAL SPEEDS
OF LEFT WHEELS AND AVERAGE OF ROTATIONAL
SPEEDS OF RIGHT WHEELS, AND DO DISPERSION OF
ROTATIONAL SPEEDS OF LEFT WHEELS AND
DISPERSION OF ROTATIONAL SPEEDS OF
RIGHT WHEELS EACH FALL
WITHIN PRESCRIBED
VALUE
?

NO

⑥

YES

S23

SET NEGATIVE CAMBER OF PRESCRIBED
VALUE FOR HIGH ROTATIONAL SPEED WHEELS

⑦

# FIG.5A

2(2FR)

2a

G

W1

# FIG.5B

2(2FR)

2a

G

W2

EP 2 241 462 A1

# FIG.6A

## FIG.6B

2(2FR)

2(2FR)

H

G

G

2a

2a

EP 2 241 462 A1

# F I G . 7A

(PROCESS EXECUTED BY CONTROL DEVICE)

( SLIP PREVENTION PROCESS )

ACQUIRE GROUND CONTACT FORCES ON RESPECTIVE WHEELS FOR ALL WHEELS ── S31

ACQUIRE ACCELERATOR OPENING DEGREE ── S12

ACQUIRE BRAKE DEPRESSION AMOUNT ── S13

S14

IS ACCELERATOR OPENING DEGREE HIGHER THAN OR EQUAL TO PRESCRIBED VALUE ? — NO → ⑧

YES

S35

IS THERE WHEEL THAT SHOWS GROUND CONTACT FORCE LOWER THAN OR EQUAL TO PRESCRIBED VALUE BELOW AVERAGE OF GROUND CONTACT FORCES ON OTHER WHEELS, AND DOES DISPERSION OF GROUND CONTACT FORCES ON OTHER WHEELS FALL WITHIN PRESCRIBED VALUE ? — NO → ⑨

YES

SET NEGATIVE CAMBER OF PRESCRIBED ANGLE FOR APPLICABLE WHEEL ── S16

⑩

⑪

( END )

# FIG.7B

(8)

(9)

S37 — **IS THERE DIFFERENCE LARGER THAN OR EQUAL TO PRESCRIBED VALUE BETWEEN AVERAGE OF GROUND CONTACT FORCES ON LEFT WHEELS AND AVERAGE OF GROUND CONTACT FORCES ON RIGHT WHEELS, AND DO DISPERSION OF GROUND CONTACT FORCES ON LEFT WHEELS AND DISPERSION OF GROUND CONTACT FORCES ON RIGHT WHEELS EACH FALL WITHIN PRESCRIBED VALUE ?**

NO

(10)

YES

S38 — **SET NEGATIVE CAMBER OF PRESCRIBED VALUE FOR LOW GROUND CONTACT FORCE WHEELS**

(11)

S19 — **IS BRAKE DEPRESSION AMOUNT LARGER THAN OR EQUAL TO PRESCRIBED VALUE ?**

NO → END

YES

S40 — **IS THERE WHEEL THAT SHOWS GROUND CONTACT FORCE HIGHER THAN OR EQUAL TO PRESCRIBED VALUE ABOVE AVERAGE OF GROUND CONTACT FORCES ON OTHER WHEELS, AND DOES DISPERSION OF GROUND CONTACT FORCE ON OTHER WHEELS FALL WITHIN PRESCRIBED VALUE ?**

NO → (12)

YES

**SET NEGATIVE CAMBER OF PRESCRIBED ANGLE FOR APPLICABLE WHEEL** — S21

(13)

(14)

EP 2 241 462 A1

# F I G . 7C

(12) ──────────────────────────┐
                                ↓

**S42**

IS
THERE DIFFERENCE
LARGER THAN OR EQUAL TO
PRESCRIBED VALUE BETWEEN AVERAGE OF
GROUND CONTACT FORCES ON LEFT WHEELS AND
AVERAGE OF GROUND CONTACT FORCES ON RIGHT
WHEELS, AND DO DISPERSION OF GROUND CONTACT
FORCE ON LEFT WHEELS AND DISPERSION OF
GROUND CONTACT FORCES ON RIGHT
WHEELS EACH FALL WITHIN
PRESCRIBED VALUE
?

NO

(13)

YES

**S43**

SET NEGATIVE CAMBER OF PRESCRIBED VALUE
FOR LOW GROUND CONTACT FORCE WHEELS

(14)

# F I G . 8A

(PROCESS EXECUTED BY CONTROL DEVICE)

( SLIP PREVENTION PROCESS )

ACQUIRE STROKES OF
RESPECTIVE WHEELS FOR ALL WHEELS — S51

ACQUIRE ACCELERATOR OPENING DEGREE — S12

ACQUIRE BRAKE DEPRESSION AMOUNT — S13

S14
IS
ACCELERATOR
OPENING DEGREE
HIGHER THAN OR EQUAL
TO PRESCRIBED
VALUE
?

NO → (15)

↓ YES

S55
IS
THERE WHEEL
THAT SHOWS STROKE LARGER THAN
OR EQUAL TO PRESCRIBED VALUE ABOVE
AVERAGE OF STROKES OF OTHER WHEELS, AND
DOES DISPERSION OF STROKES OF
OTHER WHEELS FALL WITHIN
PRESCRIBED
VALUE
?

NO → (16)

↓ YES

SET NEGATIVE CAMBER OF PRESCRIBED
ANGLE FOR APPLICABLE WHEEL — S16

(17)

(18)

( END )

42

# FIG.8B

⑮ ⑯

**S57**
IS THERE
DIFFERENCE LARGER
THAN OR EQUAL TO PRESCRIBED
VALUE BETWEEN AVERAGE OF STROKES
OF LEFT WHEELS AND AVERAGE OF STROKES OF
RIGHT WHEELS, AND DO DISPERSION OF STROKES OF
LEFT WHEELS AND DISPERSION OF
STROKES OF RIGHT WHEELS EACH
FALL WITHIN PRESCRIBED
VALUE
?

⑰ NO

YES

**S58**
SET NEGATIVE CAMBER OF PRESCRIBED
VALUE FOR LARGE STROKE WHEELS

⑱

**S19**
IS
BRAKE
DEPRESSION AMOUNT
LARGER THAN OR EQUAL TO
PRESCRIBED VALUE
?

NO

END

YES

**S60**
IS
THERE WHEEL
THAT SHOWS STROKE SMALLER
THAN OR EQUAL TO PRESCRIBED
VALUE BELOW AVERAGE OF STROKES OF
OTHER WHEELS, AND DOES DISPERSION OF
STROKES OF OTHER WHEELS FALL
WITHIN PRESCRIBED
VALUE
?

NO

⑲

YES

SET NEGATIVE CAMBER OF PRESCRIBED
ANGLE FOR APPLICABLE WHEEL
**S21**

⑳

㉑

EP 2 241 462 A1

# FIG. 8C

(19) ——————————————————┐

S62

⟨ IS THERE
DIFFERENCE LARGER THAN
OR EQUAL TO PRESCRIBED VALUE
BETWEEN AVERAGE OF STROKES OF LEFT
WHEELS AND AVERAGE OF STROKES OF RIGHT
WHEELS, AND DO DISPERSION OF STROKES OF LEFT
WHEELS AND DISPERSION OF STROKES OF
RIGHT HEELS EACH FALL WITHIN
PRESCRIBED VALUE
? ⟩

NO

(20)

YES

S63

SET NEGATIVE CAMBER OF PRESCRIBED
VALUE FOR LARGE STROKE WHEELS

(21)

# FIG.9

FWD

501

502(502FL)    504(504FL)    504(504FR)    502(502FR)

503(503FL)

557    553    503
(503FR)

555    552

BF

500    556

554

502(502RL)    504(504RL)    504(504RR)    502(502RR)

503(503RL)    503(503RR)

# FIG.10

# FIG.11

500

74

| 71~ | CPU |
|---|---|
| 72~ | ROM |
| 73~ | RAM |

75~

534~ GROUND CONTACT FORCE SENSOR DEVICE

534FL~ FL FORCE SENSOR
534FR~ FR FORCE SENSOR
534RL~ RL FORCE SENSOR
534RR~ RR FORCE SENSOR

535~ WHEEL ROTATIONAL SPEED SENSOR DEVICE

535FL~ FL ROTATIONAL SPEED SENSOR
535FR~ FR ROTATIONAL SPEED SENSOR
535RL~ RL ROTATIONAL SPEED SENSOR
535RR~ RR ROTATIONAL SPEED SENSOR

536~ ANOTHER INPUT/ OUTPUT DEVICE

558~ YAW RATE SENSOR DEVICE

559~ GRADIENT SENSOR DEVICE

560~ CAMBER ANGLE SENSOR DEVICE

560FL~ FL CAMBER ANGLE SENSOR
560FR~ FR CAMBER ANGLE SENSOR
560RL~ RL CAMBER ANGLE SENSOR
560RR~ RR CAMBER ANGLE SENSOR

INPUT/OUTPUT PORT

WHEEL DRIVING DEVICE ~503
FL MOTOR ~503FL
FR MOTOR ~503FR
RL MOTOR ~503RL
RR MOTOR ~503RR

CAMBER ANGLE ADJUSTING DEVICE ~504
FL ACTUATOR ~504FL
FR ACTUATOR ~504FR
RL ACTUATOR ~504RL
RR ACTUATOR ~504RR

VEHICLE SPEED SENSOR DEVICE ~532
LONGITUDINAL ACCELERATION SENSOR ~532a
TRANSVERSE ACCELERATION SENSOR ~532b

ACCELERATOR PEDAL SENSOR DEVICE ~552a

BRAKE PEDAL SENSOR DEVICE ~553a

STEERING SENSOR DEVICE ~554a

WIPER SWITCH SENSOR DEVICE ~555a

TURN-SIGNAL SWITCH SENSOR DEVICE ~556a

HIGH GRIP SWITCH SENSOR DEVICE ~557a

STEERING SENSOR DEVICE ~554a

# FIG.12

FWD

501

522 — 521

521 — 522

502FL 502RL

BF

522 — 521

521 — 522

502FR 502RR

# FIG.13

EP 2 241 462 A1

# F I G . 14

# F I G . 15 (PROCESS EXECUTED BY CONTROL DEVICE)

( CAMBER CONTROL PROCESS )

S501

IS WIPER SWITCH TURNED ON ? — YES

NO

S502

IS DEPRESSION AMOUNT OF ACCELERATOR PEDAL LARGER THAN OR EQUAL TO PREDETERMINED VALUE ? — YES

NO

S503

IS DEPRESSION AMOUNT OF BRAKE PEDAL LARGER THAN OR EQUAL TO PREDETERMINED VALUE ? — YES

NO

S517

IS VEHICLE SPEED LOWER THAN OR EQUAL TO PREDETERMINED VALUE ? — YES

NO

S518

IS TURN SIGNAL TURNED ON ? — YES

NO

S519

IS HIGH GRIP SWITCH TURNED ON ? — YES

NO

S504

IS STEERING ANGLE OF STEERING LARGER THAN OR EQUAL TO PREDETERMINED VALUE ? — YES

NO

S506 — SET NEGATIVE CAMBERS

SET POSITIVE CAMBERS — S505

( END )

51

# FIG.16

START FAIL SAFE

S521 — CAMBER ANGLE = 0? — NO → S522 ADJUST CAMBER ANGLES OF NON-FAULTY WHEELS TO FAULTY CAMBER ANGLE

YES ↓

S523 ADJUST CAMBER ANGLES OF NON-FAULTY WHEELS TO FAULTY CAMBER ANGLE

S524 DETECT STEERING ANGLE / DETECT YAW RATE / DETECT VEHICLE SPEED

S525 — YAW RATE = 0? — NO → S526 CONTROL STEERING SO THAT YAW RATE BECOMES 0

YES

S527 VEHICLE SPEED < PREDETERMINED SPEED? — NO

YES ↓

S528 TERMINATE STEERING CONTROL

END FAIL SAFE

EP 2 241 462 A1

# FIG. 17

```
    ( START FAIL SAFE )
            │
            ▼
┌───────────────────────┐
│  ADJUST CAMBER ANGLES OF │
│    NON-FAULTY WHEELS    │──── S531
│  TO FAULTY CAMBER ANGLE │
└───────────────────────┘
            │
            ▼
┌───────────────────────┐
│ DETECT STEERING ANGLE  │
│ DETECT YAW RATE        │
│ DETECT VEHICLE SPEED   │──── S532
│ DETECT GRADIENT        │
└───────────────────────┘
            │
            ▼
┌───────────────────────┐
│   CALCULATE YAW RATE   │
│ REQUIRED FOR TURNING FROM │
│ VEHICLE SPEED, STEERING │──── S533
│  ANGLE, GRADIENT, ETC. │
└───────────────────────┘
            │
            ▼    S534
         ╱ IS IT ╲
        ╱ YAW RATE VALUE ╲   NO
       ◇ REQUIRED FOR     ◇──────────┐
        ╲  TURNING?      ╱           │
         ╲             ╱             │
            │ YES                    │  S535
            │              ┌───────────────────────┐
            │              │   CONTROL STEERING     │
            │              │ SO AS TO BECOME YAW    │
            │              │ RATE VALUE REQUIRED    │
            │              │     FOR TURNING        │
            │              └───────────────────────┘
            │                         │
            ◄─────────────────────────┘
            ▼
    ( END FAIL SAFE )
```

# FIG.18

WLF

637 {
638
639
Ld1
}

611

GND

652b

662a 662b

# FIG.19

WLF

WRF

638
639
Ld1
} 637

637 {
638
639
Ld1

612 611
615
614

631 636

632

613

636

621

WLB

WRB

624 624

633 634

622

636 636

# FIG. 20

# FIG. 21

# FIG. 22

# F I G . 23

# F I G . 24

# FIG.25

WLF

α

611

638
637 { 639
Ld1

652a

662a

652b

662b

636

# FIG.26

WLF

636

α

Fc

Fb

# FIG. 27

WLF    636        WRF    636

658   658

Fs     Fs

L1            L1

656     656

L2            L2    GND

Fc                     Fc

# FIG. 28

662a    672

671

683 }
682 } 673

# F I G . 29

| | INTERNATIONAL SEARCH REPORT | International application No. |
|---|---|---|
| | | PCT/JP2009/052042 |

**A. CLASSIFICATION OF SUBJECT MATTER**
*B60G17/015*(2006.01)i, *B60G17/016*(2006.01)i

According to International Patent Classification (IPC) or to both national classification and IPC

**B. FIELDS SEARCHED**

Minimum documentation searched (classification system followed by classification symbols)
B60G17/015, B60G17/016

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2008/001913 A1 (Equos Research Co., Ltd.), 03 January, 2008 (03.01.08), Par. Nos. [0153], [0176] & JP 2008-30730 A    & JP 2009-7004 A | 1-7 |
| Y | JP 3-178851 A (Japan Electronic Control Systems Co., Ltd.), 02 August, 1991 (02.08.91), Page 1, lower right column, lines 10 to 15 (Family: none) | 1-7 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 April, 2009 (22.04.09) | 12 May, 2009 (12.05.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/052042

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-2024 A  (Societe de Technologie Michelin), 08 January, 2003 (08.01.03), Par. Nos. [0010], [0042]; Figs. 4 to 5 & US 6776426 B2          & EP 1247663 A1 & DE 60230209 D          & FR 2823149 A & AT 416939 T | 3-7 |
| Y | JP 2006-56462 A  (Toyota Motor Corp.), 02 March, 2006 (02.03.06), Par. No. [0008], (2), (3), (5), (7) (Family: none) | 6-7 |
| A | JP 2006-327571 A  (Equos Research Co., Ltd.), 07 December, 2006 (07.12.06), Full text; all drawings & US 2008/0162009 A1     & WO 2006/070842 A1 | 1-7 |
| P,A | JP 2008-213557 A  (Equos Research Co., Ltd.), 18 September, 2008 (18.09.08), Claims 1 to 4 (Family: none) | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10297239 A
- JP 2001315633 A
- JP 2003118554 A

- JP 2185802 A
- US 6347802 B
- JP 2005022622 A